# FASCICULE DE BREVET EUROPEEN

(11) **EP 1 370 409 B1**
(45) Date de publication et mention de la délivrance du brevet: **12.07.2006**
(21) Numéro de dépôt: 02753577.2
(22) Date de dépôt: 18.03.2002
(51) Int. Cl.: B29D 23/20, B29C 43/18, B29C 43/08

(54) **ATELIER ET PROCEDE DE FABRICATION DE TUBES SOUPLES EN MATIERE PLASTIQUE AVEC MOULAGE DE LA TETE SUR LA JUPE EFFECTUEE PAR DES OUTILLAGES EN MOUVEMENT CONTINU**
ANLAGE UND VERFAHREN ZUR HERSTELLUNG FLEXIBLER ROHRE AUS KUNSTSTOFF, WOBEI DAS FORMEN DES KOPFES OBEN AUF DER SCHÜRZE DURCH SICH KONTINUIERLICH BEWEGENDE WERKZEUGE DURCHGEFÜHRT WIRD
PLANT FOR AND METHOD OF PRODUCTION OF FLEXIBLE TUBES MADE FROM PLASTIC WITH MOULDING OF THE HEAD ON TOP OF THE SKIRT CARRIED OUT BY CONTINUOUSLY MOVING TOOLS

(30) Priorité: 19.03.2001 FR 0103706; 06.02.2002 US 355614 P
(43) Date de publication de la demande: 17.12.2003
(73) Titulaire: CEBAL S.A.S., 92230 Gennevilliers (FR)
(72) Inventeur: GRUAU, Bertrand, 51800 Verdun (FR); ZAKRZEWSKI, Hervé, F-55100 Verdun (FR); BOSSHARDT, Michel, F-51800 Sainte-Ménéhould (FR)
(74) Mandataire: Fénot, Dominique
(86) Numéro de dépôt international: PCT/FR2002/000950
(87) Numéro de publication internationale: WO 2002/074523

(56) Documents cités:
- WO-A-01/32404
- US-A- 3 591 896
- US-A- 3 896 710
- US-A- 4 310 366
- US-A- 4 314 799
- US-A- 4 352 775
- US-A- 4 664 284
- US-A- 5 225 132
- US-A- 6 068 717
- US-E- R E29 448

## Description

### DOMAINE TECHNIQUE

L'invention concerne un atelier et un procédé de fabrication de tubes souples destinés à stocker et distribuer des produits fluides à pâteux, tels les produits cosmétiques, les produits pharmaceutiques, les produits d'hygiène ou les produits alimentaires. Les tubes souples concernés présentent une tête en matière(s) plastique(s) et une jupe cylindrique (axisymétrique ou non) comportant essentiellement une ou plusieurs couches en matières plastiques, éventuellement avec une fine couche métallique intermédiaire.

### ETAT DE LA TECHNIQUE

En général, un tube souple est réalisé par assemblage de deux pièces fabriquées séparément: une jupe souple cylindrique de longueur donnée (typiquement 3 à 5 fois le diamètre) et une tête comprenant un goulot avec orifice de distribution et une épaule reliant ledit goulot à la jupe cylindrique. La tête en matière(s) plastique (s) peut être moulée séparément puis soudée sur une extrémité de la jupe mais celle-ci est avantageusement moulée et soudée de façon autogène à la jupe en utilisant soit une technique de moulage par injection (FR 1 069 414) soit une technique de moulage par compression d'une ébauche extrudée (FR 1 324 471).

Dans ces deux techniques, la jupe est emmanchée autour d'un poinçon, une de ses extrémités dépassant légèrement de l'extrémité du poinçon, ladite extrémité de poinçon servant de moule pour la réalisation de la surface interne de la tête de tube (intérieur de l'épaule et du goulot). Dans ces deux techniques, on utilise une matrice qui vient se plaquer contre l'extrémité du poinçon, l'empreinte de cette matrice définissant la surface extérieure de l'épaule et du goulot. La différence principale entre ces procédés réside dans le fait que ces outillages sont d'abord plaqués fermement l'un contre l'autre avant l'injection de la matière plastique dans le premier cas et que c'est leur rapprochement mutuel qui entraîne la compression d'un ébauche extrudée dans le second cas.

Dans les deux cas, l'extrémité de la jupe débordant du poinçon est emprisonnée dans la cavité délimitée par l'extrémité du poinçon et l'empreinte de la matrice. La matière plastique - sous l'effet de l'injection ou sous celui de la compression - vient au contact de l'extrémité de la jupe et, se trouvant à une température supérieure à leurs points de ramollissement Vicat respectifs, les matières plastiques de la tête et de la jupe se soudent intimement entre elles sans autre apport de chaleur ou de matière. Après un léger maintien sous pression (de l'ordre de quelques secondes) et refroidissement, la tête est moulée dans les dimensions voulues et soudée fermement à la jupe.

### PROBLEME POSE

Les techniques précédentes, apparues il y a une cinquantaine d'années pour la première et une quarantaine d'années pour la seconde, ont été régulièrement perfectionnées. Elles permettent d'atteindre à l'heure actuelle des cadences de fabrication voisines de 200-250 unités par minute. Mais il semble que l'on arrive maintenant en limite et qu'une augmentation sensible des cadences de production (au-delà de 250-300 unités par minute) ne peut plus être obtenue par une simple adaptation des dispositifs existants.

La demanderesse a donc cherché à réaliser un nouvel atelier de fabrication de tubes souples conçu pour obtenir dans des conditions économiques acceptables des cadences de production significativement supérieures.

Le brevet US 5 225 132 décrit un procédé de fabrication de tubes souples comportant une jupe et une tête munie d'un goulot et d'une épaule. Dans ce procédé, les jupes sont animées d'un mouvement continu à l'aide d'un premier moyen de transfert et sont chargées sur des poinçons associés à une chaîne de transfert animée d'un mouvement continu synchronisé avec le premier moyen de transfert. Les tubes souples sont réalisés par moulage de la tête après fixation d'une ébauche sur une extrémité de la jupe, la tête étant obtenue par compression-moulage de ladite ébauche, par rapprochement relatif d'un poinçon sur lequel la jupe est emmanchée et d'une matrice, le poinçon et la matrice étant animés d'un mouvement d'ensemble continu. Les tubes sont ensuite déchargés sur un deuxième moyen de transfert animé d'un mouvement continu synchronisé avec la chaîne de transfert. L'ébauche se présente sous la forme d'un bouchon obtenu par découpe dans un film de "hot melt". Elle est déposée sur une extrémité ouverte de la jupe avant d'être mise en forme. Une telle procédure est très délicate car elle impose d'une part que l'extrémité ouverte de la jupe déborde largement de l'extrémité du poinçon - qui perd ainsi sa fonction de support - et elle impose d'autre part que la jupe, qui n'est pas encore dans sa position définitive, se déplace par rapport au poinçon avant que la compression proprement dite ne soit mise en oeuvre.

### OBJET DE L'INVENTION

Un premier objet selon l'invention est un procédé de fabrication de tubes souples tel que décrit en revendication 1.

Un autre objet selon l'invention est un atelier de fabrication de tubes souples comportant une jupe et une tête munie d'un goulot et d'une épaule reliant ledit goulot à ladite jupe, ledit atelier comportant trois zones opérationnelles distinctes,
- la première zone étant affectée à la fabrication desdites jupes, comprenant typiquement un dispositif de mise en forme d'un long manchon cylindrique en sortie duquel les jupes sont découpées dans le manchon à la longueur voulue,
- la deuxième zone étant affectée à la fabrication des tubes souples, comportant au moins un dispositif de fabrication d'ébauches en matière plastique comprenant uneextrudeuse et plusieurs dispositifs de moulage des têtes par compression desdites ébauches, chaque dispositif de moulage comprenant une matrice et un poinçon, chaque poinçon étant muni avant moulage d'une desdites jupes de telle sorte que, une fois moulée, la tête est soudée à ladite jupe,
- la troisième zone étant affectée au parachèvement des tubes souples ainsi réalisés,
ledit atelier comprenant également
- un premier moyen de transfert, transférant en mouvement continu lesdites jupes de ladite première zone vers ladite deuxième zone,
- et un second moyen de transfert transférant, en un mouvement continu synchronisé avec le précédent, lesdits tubes de ladite deuxième zone vers ladite troisième zone,
- ladite deuxième zone comprenant un troisième moyen de transfert transférant les poinçons en un mouvement continu synchronisé avec celui du premier moyen de transfert et avec celui du deuxième moyen de transfert et la deuxième zone comprenant également des moyens de chargement, chargeant les jupes sur les poinçons, associés au mouvement synchronisé des premier et troisième moyens de transfert, et des moyens de déchargement, libérant les poinçons des tubes qui les coiffent, associés au mouvement synchronisé des deuxième et troisième moyens de transfert.

Caractérisé en ce que ladite deuxième zone affectée à la fabrication des tubes comprend également un moyen de prélèvement des ébauches, typiquement par cisaillage de l'extrudat issu de ladite extrudeuse et un moyen de transfert qui permet de déposer ladite ébauche dans l'entrefer de l'outillage, typiquement dans l' empreinte de la matrice ou sur l'extremité du poinçon de telle sorte qu'au cours de la compression la matière plastique de l'ébauche arrive en contact de l'éxtrémité de la jupe et que les matières plastiques de l'ébauche et de la jupe se fondent intimement entre elles sans autre apport de chaleur ou de matière.

La première zone comprend typiquement un dispositif de mise en forme d'un long manchon cylindrique et des moyens de découpe des jupes dans ce manchon. Le manchon cylindrique est "long", en ce sens que sa longueur est significativement plus grande que celle des jupes. Il s'agit par exemple d'un manchon plastique extrudé ou coextrudé, la ou les matière(s) plastique(s) étant continuellement alimentée(s) par une (plusieurs) extrudeuse(s) à vis. Il peut s'agir également d'un manchon réalisé par roulage et soudage longitudinal d'une bande comprenant une ou plusieurs couches en matière plastiques - et éventuellement une fine couche métallique intermédiaire. On roule localement la bande pour mettre en regard ses bords latéraux puis on soude lesdits bords latéraux après les avoir juxtaposés ou accolés. On réalise ainsi un long manchon cylindrique défilant dans la direction de son axe.

On effectue ensuite une découpe discontinue de l'extrémité du long manchon cylindrique pour obtenir une jupe à la longueur désirée, de préférence à l'aide d'un ou plusieurs outils de découpe. Ces outils de découpe accompagnent le mouvement d'avance du long manchon cylindrique de telle sorte qu'ils tranchent la paroi dudit long manchon cylindrique dans un plan restant perpendiculaire à l'axe dudit long manchon cylindrique. Une fois découpées, les jupes restent dans l'axe du long manchon cylindrique et se poussent mutuellement, sous l'effet de l'avance dudit long manchon, jusqu'à un endroit où elles sont prélevées par le premier moyen de transfert.

Le premier moyen de transfert dispose de moyens de prélèvement individualisés, typiquement des tiges destinées à être emmanchées par les jupes, qui se déplacent en un mouvement continu qui leur permet d'arriver au même endroit au regard de l'extrémité d'une nouvelle jupe à chaque fois que le long manchon cylindrique avance d'une longueur de jupe. Ledit premier moyen de transfert transfère en mouvement continu les jupes de la première zone vers la deuxième zone. Il impose à chaque jupe un mouvement tel que l'axe de la jupe n'est pas tangent à la trajectoire décrite par ce mouvement. De préférence l'axe de la jupe reste toujours sensiblement perpendiculaire à ladite trajectoire. De préférence également, de façon à ce que l'ensemble des jupes reste dans une position proche d'une position moyenne, on choisit des tiges de diamètre assez proche du diamètre de la jupe. De telles tiges seront appelés par la suite "mandrins de chargement".

La deuxième zone selon l'invention est affectée à la fabrication des tubes souples. Elle comporte une aire de chargement des jupes sur les poinçons, dans laquelle des moyens de chargement agissent entre le premier moyen de transfert et le troisième moyen de transfert, une aire de fabrication d'ébauches en matière plastique, une aire de fabrication des tubes par moulage par compression des têtes sur les extrémités des jupes emmanchées autour des poinçons, et une aire de déchargement des tubes ainsi réalisés, dans laquelle, des moyens de déchargement agissent entre le troisième moyen de transfert et le deuxième moyen de transfert. Le troisième moyen de transfert transfère les poinçons dans l'aire de chargement des jupes, l'aire de fabrication des tubes et l'aire de déchargement des tubes. La description de ces différentes aires sera détaillée plus loin.

Le deuxième moyen de transfert transfère en mouvement continu les tubes de la deuxième zone vers la troisième zone. Il impose à chaque tube un mouvement tel que l'axe dudit tube n'est pas tangent à la trajectoire. De préférence l'axe dudit tube reste toujours sensiblement perpendiculaire à ladite trajectoire. Typiquement, ce deuxième moyen de transfert peut être une chaîne continue à godets. Les godets sont des réceptacles creux destinés à recueillir le tube, leur cavité cylindrique ayant un diamètre légèrement supérieur à celui des tubes. Ladite cavité cylindrique est en général munie de canaux débouchants dans lesquels on fait circuler de l'air soit par aspiration pour maintenir le tube coaxialement à ladite cavité ou par soufflage pour éjecter lesdits tubes.

Le deuxième moyen de transfert est dit synchronisé au premier moyen de transfert en ce sens qu'il permet de débiter un flux de tubes sortant de la deuxième zone identique au flux de jupes entrant dans la deuxième zone. De la sorte, il n'y a ni accumulation ni épuisement du lot de jupes (donc de tubes) traversant la seconde zone. Pour donner une certaine souplesse à la bonne marche de l'atelier, les premier et deuxième moyens de transfert sont également munis de moyens d'accumulation permettant de continuer temporairement (quelques minutes au plus) une opération amont alors qu'une opération avale ne peut être effectuée.

Le mouvement du premier moyen de transfert, le mouvement du deuxième moyen de transfert et le mouvement du troisième moyen de transfert sont dits "continus" en ce sens qu'en aucun moment, notamment pendant le chargement des jupes, pendant la compression de la tête et pendant le déchargement des tubes, les jupes ou les tubes ne sont maintenus immobiles. De préférence, le mouvement des matrices est également continu et suit le mouvement général imposé par le troisième moyen de transfert.

La troisième zone est affectée au parachèvement des tubes. En général, il reste un certain nombre d'opérations complémentaires à réaliser sur le tube, une fois que la tête a été moulée sur l'extrémité de la jupe. Ces opérations peuvent être: fixation d'une capsule de bouchage, impression de la jupe, dépôt d'un vernis extérieur, etc... Les postes de parachèvement peuvent être regroupés dans des dispositifs (par exemple des bouchonneuses) qui sont alimentés en tubes par le deuxième moyen de transfert.

Reprenons en détail la description de la deuxième zone.

La deuxième zone comprend une aire de chargement dans laquelle des moyens de chargement transfèrent en un mouvement continu les jupes de telle sorte qu'elles quittent le premier moyen de transfert et qu'elles s'emmanchent autour des poinçons animés du mouvement imposés par le troisième moyen de transfert

La synchronisation du mouvement continu des poinçons avec celui du premier moyen de transfert des jupes est telle que, dans ladite aire de chargement, les poinçons et les jupes suivent des trajectoires parallèles tandis que leurs axes arrivent sensiblement en coïncidence. Lorsqu'ils arrivent sensiblement en coïncidence, un moyen de chargement attaché soit au premier moyen de transfert soit au troisième moyen de transfert, impose à une jupe un mouvement relatif de translation axiale en direction du poinçon de telle sorte que la jupe s'emmanche avec un faible jeu dans le poinçon par sa première extrémité ouverte, ladite translation relative étant stoppée lorsque ladite jupe est presque entièrement emmanchée autour du poinçon; une de ses extrémités destinée à être soudée à la tête, débordant de la tête du poinçon. De préférence, ce moyen de chargement est attaché au troisième moyen de transfert, ce qui permet de conserver une simple chaîne à mandrins de chargement - comme moyen de transfert des jupes.

Dans les cas où la durée des opérations de moulage est particulièrement longue (fabrications nécessitant plusieurs compressions successives, par exemple: réalisation de têtes multicouches ou encore surmoulage d'un bouchon), il est possible de ménager plusieurs troisièmes moyens de transfert qui transféreraient chacun une pluralité de poinçons et amèneraient ceux-ci dans une même aire de chargement où plusieurs moyens de chargement agiraient simultanément pour alimenter les poinçons mû par les différents troisièmes moyens de transfert en jupes du premier moyen de transfert. Toutefois, dans le cas le plus fréquent, le temps nécessaire pour la compression, le maintien sous contrainte et le refroidissement de la tête est suffisamment court pour qu'un seul troisième moyen de transfert suffise.

Dans l'aire de fabrication des tubes circulent plusieurs dispositifs de moulage des têtes animés du mouvement continu du troisième moyen de transfert. Le nombre de ces dispositifs est défini en fonction de la cadence visée et de la durée nécessaire à la compression et au refroidissement avec maintien sous contrainte de la pièce moulée (de l'ordre de quelques secondes, typiquement 5 secondes pour une géométrie courante de tête de tube souple ). Ces dispositifs circulent en boucle(s) fermée(s) qui ne coïncident pas obligatoirement: la boucle des poinçons et la boucle des matrices. Dans l'aire de fabrication, le poinçon et la matrice suivent, grâce au troisième moyen de transfert, un mouvement général ou global continu synchronisé avec celui desdits premier et deuxième moyens de transfert. Ce mouvement est dit général puisque le poinçon et la matrice doivent se déplacer l'un par rapport à l'autre, d'une part pour effectuer la compression, d'autre part, en fin de compression, pour la première phase du démoulage qui consiste à éloigner la matrice du poinçon restant "coiffé" par le tube.

Les poinçons sont mus par le troisième moyen de transfert qui les fait circuler dans l'aire de chargement des jupes, dans l'aire de fabrication et l'aire de déchargement pour retourner vers l'aire de chargement. Lés matrices ont un mouvement imposé au moins dans l'aire de fabrication par le troisième moyen de transfert qui anime le mouvement des poinçons mais elles doivent également, en dehors de la zone de fabrication, s'éloigner suffisamment desdits poinçons pour permettre la mise en place de l'ébauche en matière plastique destinée à la compression suivante. De préférence, pour faciliter l'alignement des axes des poinçons et de ceux des matrices, les matrices restent solidaires du troisième moyen de transfert même en dehors de la zone de fabrication. L'éloignement relatif des poinçons par rapport aux matrices se fait suivant une direction perpendiculaire à la direction commune des axes des poinçons et des matrices et à la trajectoire imposée par le troisième moyen de transfert.

Dans l'aire de fabrication, les dispositifs de moulage comprennent chacun une matrice et un poinçon déjà équipé d'une jupe, ladite jupe étant alors emmanchée autour du poinçon, une de ses extrémités dépassant légèrement de la tête dudit poinçon. La matrice et le poinçon sont alignés suivant leur axe commun et l'entrefer est occupé par l'ébauche. L'ébauche est une pièce en matière thermoplastique extrudée que l'on dépose soit dans l'empreinte de la matrice soit sur l'extrémité du poinçon. Le dépôt se fait soit au défilé en sortie d'extrusion - dans ce cas, l'ébauche a une forme compacte de préférence axisymétrique - soit à l'aide d'un autre moyen de transfert, c'est-à-dire un quatrième moyen de transfert transférant les ébauches en un mouvement continu synchronisé avec le troisième moyen de transfert ou encore un cinquième moyen de transfert transférant les ébauches en un mouvement discontinu, c'est-à-dire permettant leur réception dans des réceptacles immobiles qui sont ensuite mis en mouvement de façon à pouvoir déposer les ébauches dans l'entrefer du dispositif de moulage mû par le troisième moyen de transfert.

La tête du poinçon a une forme destinée à définir la surface intérieure de la tête de tube. L'empreinte de la matrice définit la surface extérieure de la tête.

Le poinçon est, dans la zone de fabrication, muni de la jupe, emmanchée autour de lui sur une hauteur telle que l'extrémité de la jupe dépasse légèrement de la tête de poinçon: typiquement, 3 à 4 millimètres au-delà de l'épaulement servant de base à la forme sensiblement tronconique de la tête du poinçon qui définit la forme de la surface intérieure de l'épaule du tube à réaliser. De façon à ce que la jupe reste dans cette position jusqu'au moulage, le poinçon est muni d'un ou plusieurs éléments élastiques à déplacement radial offrant un encombrement cylindrique dont le diamètre est, au repos, supérieur à celui de la jupe.

Lorsque le poinçon et la matrice sont alignés, lorsque l'entrefer compris entre la tête du poinçon et l'empreinte de la matrice est rempli par l'ébauche, dont la température est dans le domaine ou légèrement au-dessus de la température de mise en oeuvre, on rapproche le poinçon et la matrice, de préférence par translation relative de l'un vers l'autre le long de leur axe commun. Le moyen de translation relative agissant sur le poinçon (respectivement la matrice) est associé au troisième moyen de transfert et impose une translation perpendiculaire à la trajectoire de la matrice (respectivement du poinçon).

Sous l'effet de cette translation l'ébauche se déforme et l'écoulement de la matière plastique est guidé par les surfaces libres de l'entrefer résiduel qui diminue progressivement de volume. Lorsque le poinçon et la matrice sont accolés, ils définissent une cavité de moulage où l'extrémité de la jupe est emprisonnée. La matière plastique de l'ébauche vient au contact de l'extrémité de la jupe. Les matières plastiques de la tête et de la jupe se soudent intimement entre elles sans autre apport de chaleur ou de matière. Elles restent soudées entre elles après un léger maintien sous pression et après refroidissement.

La compression entraînant des efforts non négligeables, l'outillage de moulage qui n'est pas soumis à la translation est de préférence soutenu par un moyen d'appui sur toute la partie de son parcours pendant laquelle l'autre outillage de moulage se rapproche puis reste solidaire.

La deuxième zone comprend également une aire de déchargement dans laquelle des moyens de déchargement transfèrent en un mouvement continu les tubes emmanchés autour des poinçons, animés du mouvement imposé par le troisième moyen de transfert, vers le deuxième moyen de transfert.

La synchronisation du mouvement continu du troisième moyen de transfert avec celui du deuxième moyen de transfert est telle que, dans l'aire de déchargement, les poinçons munis des tubes et les godets suivent des trajectoires parallèles tandis que leurs axes arrivent sensiblement en coïncidence. Lorsqu'ils arrivent sensiblement en coïncidence, un moyen de déchargement attaché soit au troisième moyen de transfert soit au deuxième moyen de transfert, impose aux tubes un mouvement relatif de translation axiale en direction du godet de telle sorte que le tube est recueilli dans la cavité du godet. De préférence, ce moyen de déchargement est attaché au moyen de transfert des poinçons, ce qui permet de conserver une simple chaîne à godets comme deuxième moyen de transfert.

La synchronisation sous-entend le fait que le flux des tubes sortant de la deuxième zone est égal au flux des jupes entrant dans la deuxième zone. Rien ne s'oppose, dans les cas où les opérations de moulage sont particulièrement longues, à ménager plusieurs troisièmes moyens de transfert qui transfèreraient chacun une pluralité de poinçons et amèneraient ceux-ci dans une même aire de déchargement où plusieurs moyens de déchargement agiraient simultanément pour dévêtir chaque poinçon de chaque boucle et alimenter le deuxième moyen de transfert en tubes provenant des divers troisièmes moyens de transfert.

Lorsqu'ils sont attachés au troisième moyen de transfert, les moyens de chargement et les moyens de déchargement peuvent coïncider en des moyens capables d'effectuer une translation relative dans les deux sens, remplissant ainsi les deux fonctions. Toutefois, de préférence, les jupes étant très souples et difficiles à manipuler par leur paroi cylindrique, on utilise deux moyens différents: le premier est par exemple un doigt (ou une fourche) pousseur, poussant une extrémité de la jupe vers le poinçon et le deuxième peut tout simplement comprendre une canalisation ménagée dans le poinçon, débouchant en un ou plusieurs endroits de la tête du poinçon et par laquelle on fait passer un jet d'air comprimé. Une surpression s'exerce sur la face interne de la tête de tube, suffisante pour détacher ladite tête de tube de la tête de poinçon puis éjecter le tube axialement en direction du godet.

La deuxième zone comprend également l'aire de fabrication des ébauches. Celle-ci n'est pas obligatoirement concernée par le mouvement continu imposé selon l'invention par le troisième moyen de transfert. Les ébauches peuvent être par exemple obtenues "statiquement" par extrusion puis prélevées et déposées au passage d'une matrice ou d'un poinçon. Cependant, pour faciliter la compression de la tête, il est souvent avantageux de partir d'une ébauche déjà axisymétrique. Ainsi, une ébauche de forme torique permet de remplir la cavité de moulage de la tête avec plus de régularité. II est préférable de chercher à préserver la forme d'une telle ébauche jusqu'à ce que celle-ci soit placée dans l'empreinte de la matrice ou sur la tête de poinçon, autour de la protubérance définissant la surface interne du goulot. Ceci peut s'avérer difficile si l'on pratique des prélèvements au défilé à grande vitesse et l'on cherchera dans ce cas à les déposer dans l'entrefer des dispositifs de moulage en suivant un mouvement continu synchronisé avec celui du troisième moyen de transfert, soit en effectuant l'extrusion avec des moyens mus par un quatrième moyen de transfert synchronisé avec le troisième moyen de transfert soit en effectuant l'extrusion "statiquement" et en utilisant un cinquième moyen de transfert transférant en un mouvement discontinu les ébauches ainsi extrudées par l'intermédiaire de réceptacles recevant statiquement les extrudats puis mis en mouvement de façon à pouvoir déposer les ébauches dans l'entrefer du dispositif de moulage mû par le troisième moyen de transfert.

Dans le premier cas, l'ébauche extrudée sort d'une filière d'extrusion immobile alimentée par une extrudeuse fixe (fixe, en ce sens que seule la vis d'extrusion tourne autour de son axe). Elle est par exemple déposée dans l'empreinte de la matrice, alors que celle-ci, mue par le troisième moyen de transfert, se déplace au voisinage de la sortie de la filière pour recueillir l'ébauche au passage. Dans un mode de réalisation simple, l'ébauche extrudée sort en continu horizontalement et un doigt racleur situé au dessus de la matrice vient au passage cisailler l'extrudat qui tombe par gravité dans l'empreinte de la matrice. La vitesse de défilement des matrices - et des doigts racleurs associés - et la vitesse d'extrusion de l'extrudat en matière thermoplastique sont définies de telle sorte que l'ébauche obtenue par cisaillement de l'extrudat ait la quantité de matière thermoplastique voulue, permettant de remplir avec une bonne précision (les écarts de fabrication doivent typiquement être inférieurs à 5%) le volume de la cavité de moulage.

On peut également modifier la sortie de filière de telle sorte que l'extrudat sorte verticalement et en utiliser une vanne à tiroir libérant puis obturant la sortie de filière. Le coulissement du tiroir cisaille l'extrudat à la longueur désirée et l'extrudat obtenu tombe dans l'empreinte de la matrice que l'on fait circuler en - dessous, à la verticale de la sortie de la filière.

A partir de cette ébauche, il s'agit donc de réaliser une tête de tube comportant une épaule - dont une extrémité est soudée de façon autogène à une extrémité de la jupe - et un goulot, le goulot étant muni d'un orifice de distribution. La réalisation du goulot muni de son orifice de distribution pose un certain nombre de problèmes lorsque le moulage est réalisé par compression, problèmes exacerbés lorsqu'on utilise des outillages en mouvement continu: soit on utilise comme ébauche une noix massive extrudée et dans ce cas il est très difficile d'éviter la formation d'un voile résiduel recouvrant l'orifice, soit on utilise une ébauche en forme de tore que l'on emmanche autour d'une protubérance centrale liée à la matrice ou au poinçon.

Si on emploie une ébauche en forme de noix massive, on obtient presque systématiquement un voile résiduel à la place de l'orifice. Même si on prévoit un système d'emboîtement par exemple d'une protubérance du poinçon venant s'engager dans une cavité de la matrice, il n'est pas possible d'imposer un ajustement serré et un alignement parfait des outillages, d'une part parce que ce sont des conditions peu compatibles avec des outillages en mouvement et des cadences de fabrication élevées, d'autre part parce que la pression nécessaire en fin de compression devient rédhibitoire.

Si on emploie une ébauche torique, le problème est de réaliser cette dernière à la forme voulue puis de la mettre en place sans trop la déformer dans l'entrefer compris entre les outillages de moulage.

Une première solution consiste à réaliser des ébauches toriques à l'aide d'extrudeuses mobiles. On utilise alors avantageusement un quatrième moyen de transfert transférant les ébauches extrudées en un mouvement continu synchronisé avec le troisième moyen de transfert. Il peut s'agir d'un moyen de transfert comportant plusieurs extrudeuses mues par ce même quatrième moyen de transfert qui leur impose localement une trajectoire parallèle à celle des poinçons ou à celle des matrices destiné(e)s à recueillir les ébauches, l'axe d'extrusion venant sensiblement en coïncidence avec l'axe de l'outillage récepteur, sur une longueur suffisante pour que la quantité de matière plastique désirée puisse être extrudée.

Une deuxième solution consiste à réaliser les ébauches avec une extrudeuse immobile. On utilise alors un ou plusieurs quatrièmes moyens de transferts transférant en un mouvement continu des réceptacles intermédiaires recueillant les ébauches. Ce (ou ces) quatrième(s) moyen(s) de transfert impose(nt) un mouvement suffisamment lent pour pouvoir recueillir les ébauches au défilé dans de bonnes conditions, chaque réceptacle de chaque quatrième moyen de transfert passant devant la sortie d'une filière d'extrusion immobile. On réalise à l'aide de l'extrudeuse immobile un extrudat cylindrique épais que l'on vient cisailler à une hauteur telle que l'on obtient la quantité de matière voulue pour obtenir la tête de tube.

Dans une première variante de cette, solution, l'extrudat est cisaillé puis recueilli dans un réceptacle muni d'une broche de perforation dont l'extrémité vient effleurer la filière et qui se déplace par rapport à ladite filière de telle sorte que le temps nécessaire pour parcourir le diamètre interne du trou central de l'ébauche torique correspond à la durée d'extrusion permettant d'obtenir la quantité de matière plastique nécessaire.

Dans une deuxième variante, préférée, de cette solution, le cisaillement est réalisé au défilé à l'aide d'une lame de forme particulière solidaire du quatrième moyen de transfert. Cette lame a typiquement une forme en V qui permet de cisailler l'extrudat tout en obtenant une ébauche torique peu déformée. Cette lame fait également office de réceptacle après cisaillement de l'extrudat et recueille l'ébauche torique ainsi obtenue le temps nécessaire de son transfert vers les outillages de moulage par compression.

Ce ou ces quatrièmes moyens de transferts transfère(nt) en un mouvement continu les réceptacles intermédiaires qui recueillent les ébauches extrudées en un mouvement continu synchronisé avec le troisième moyen de transfert et l'on procède à la mise en place, par gravité et éventuellement avec l'aide d'un jet d'air, dans l'entrefer compris entre les outillages de moulage, c'est dire dans l'empreinte de la matrice ou autour d'une protubérance centrale du poinçon. Un mode de réalisation particulièrement simple et efficace de cette variante est présenté dans l'exemple 3.

Une autre variante de cette deuxième solution consiste à également utiliser un cinquième moyen de transfert transférant en un mouvement discontinu des réceptacles intermédiaires recueillant à l'arrêt complet les ébauches à la sortie d'une extrudeuse immobile puis les mettant en mouvement pour déposer les ébauches dans l'entrefer des outillages de moulage mus par le troisième moyen de transfert. Un tel moyen peut par exemple être une chaîne à godets associée à un accumulateur.

Une troisième solution consiste à réaliser une simple noix par extrusion: on n'évite pas la formation d'un voile obstruant l'orifice au cours de la compression. Au contraire, on le réalise intentionnellement. Nous nommerons par la suite ce voile: "opercule" puisqu'il bouche l'orifice de distribution. On donne à l'opercule une forme spécifique, telle qu'il peut être ensuite facilement détaché sans faire appel à un outil de découpe particulier, pour obtenir un orifice de distribution présentant des bords nets et propres.

Dans cette troisième solution, le poinçon et la matrice ont des empreintes dessinées de telle sorte que la tête ainsi moulée a un goulot dont l'extrémité supérieure est surmontée d'un opercule qui présente au moins une paroi transversale qui comprend une zone sécable dont le contour fermé délimite la forme désirée de l'orifice et qui est entourée de deux zones aptes à résister à l'effort mécanique nécessaire pour rompre ladite zone sécable, l'une d'entre elles étant destinée à transmettre ledit effort mécanique et l'autre à servir d'appui.

Après moulage, on enlève ledit opercule par l'application d'un effort mécanique sur une partie de l'opercule. Cette partie de l'opercule est séparée de la zone sécable par la zone apte à transmettre ledit effort mécanique. L'application dudit effort mécanique a pour conséquences la rupture de la zone sécable et l'obtention de l'orifice de distribution. Un mode de réalisation particulièrement simple et efficace, présenté dans l'exemple 2, consiste à donner à une partie de l'opercule une forme de bâtonnet axial. Une fois la matrice dégagée, le tube ainsi réalisé et muni dudit opercule est solidaire du poinçon et se déplace en un mouvement continu grâce au troisième moyen de transfert. Il suffit alors de placer un simple doigt immobile au travers de la trajectoire de l'extrémité du bâtonnet, en le situant à une distance telle que la zone sécable est refroidie jusqu'à une température légèrement inférieure à la température de transition vitreuse lorsque la tête de tube arrive à cette position (il suffit de quelques secondes). L'extrémité du bâtonnet est ainsi immobilisée par le doigt tandis que la base du bâtonnet poursuit son mouvement continu. Il en résulte une flexion imposée au bâtonnet qui est transmise à la paroi transversale. Sous l'effet de cette flexion, la zone sécable se rompt et l'opercule est éjecté, suivant une direction précise et reproductible, en dehors de la chaîne de fabrication en mouvement continu.

Un autre objet de l'invention est un procédé de fabrication de tubes souples comportant une jupe et une tête munie d'un goulot et d'une épaule reliant ledit goulot à ladite jupe, ledit procédé comprenant les étapes suivantes:
- une première étape dans laquelle des jupes sont animées d'un mouvement continu à l'aide d'un premier moyen de transfert
- une seconde étape dans laquelle lesdites jupes sont chargées à l'aide de moyens de chargement sur des poinçons associés à un troisième moyen de transfert animé d'un mouvement continu synchronisé avec le premier moyen de transfert, une des extrémités des jupes dépassant légèrement des poinçons;
- une troisième étape dans laquelle les tubes souples sont réalisés par moulage de la tête avec soudure autogène sur une extrémité de la jupe, la tête étant obtenue par compression moulage d'une ébauche, par rapprochement relatif du poinçon muni de la jupe et d'une matrice, ledit poinçon et ladite matrice définissant lorsqu'ils sont accolés une cavité de moulage où l'extrémité de la jupe est emprisonnée, ledit poinçon et ladite matrice étant animés d'un mouvement d'ensemble continu associé au troisième moyen de transfert, ladite ébauche étant déposée avant compression dans l'entrefer compris entre le poinçon et la matrice à l'aide d'un quatrième moyen de transfert animé d'un mouvement continu synchronisé avec le troisième moyen de transfert;
- une quatrième étape dans laquelle lesdits tubes sont déchargés à l'aide de moyens de déchargement sur un deuxième moyen de transfert animé d'un mouvement continu synchronisé avec le troisième moyen de transfert.

Le procédé est décrit ici à partir du moment où les jupes sont déjà réalisées et jusqu'au moment où les tubes sont envoyés vers des opérations de parachèvement. Les étapes du procédé selon l'invention peuvent évidemment être enrichies par les caractéristiques préférées décrites supra. Les poinçons sont dits "associés" au troisième moyen de transfert en ce sens que, comme les matrices, ils sont animés d'un mouvement d'ensemble continu correspondant à celui du troisième moyen de transfert mais ils sont également animés d'un mouvement relatif destiné au rapprochement ou à l'éloignement avec la matrice, ou au chargement des jupes ou encore au déchargement des tubes.

On peut également envisager certaines variantes, par exemple l'emploi de plusieurs éléments déjà réalisés et leur assemblage par compression moulage d'une pièce intermédiaire et fusion autogène ou emprisonnement d'une partie de ces éléments avec la pièce moulée par compression: on peut ainsi munir le poinçon avec un insert disposé sur son extrémité, ledit insert étant destiné à couvrir la surface interne de l'épaule pour augmenter la barrière de diffusion en cet endroit. De tels inserts sont par exemple décrits dans US 4 466 284 (KMK), EP 0 130 239 (AISA) ou EP 0 724 897 (CEBAL S.A.). La tête est moulée par compression comme décrit précédemment. La cavité de moulage est dessinée de telle sorte que l'insert se trouve emprisonné à ses extrémités par la matière plastique de la tête moulée par compression. Rien n'empêche évidemment que le poinçon soit également muni de la jupe, emmanchée autour de sa surface cylindrique, et qu'il se produise, simultanément au piégeage de l'insert, une soudure autogène de l'extrémité de la jupe avec la matière plastique de la tête moulée par compression.

Une autre variante consiste à munir le poinçon de la jupe et d'une tête déjà moulée mais présentant un diamètre extérieur légèrement plus faible que celui de la jupe, et à réaliser le tube par compression moulage d'une ébauche torique destinée à réaliser la seule extrémité extérieure de l'épaule, qui constitue la zone frontière entre la tête et la jupe, comme indiqué dans US 6 068 717 (B.A. Schwyn). Les matières plastiques de la tête, de la jupe et de l'ébauche torique sont compatibles en fusion et les extrémités de la tête et de la jupe sont suffisamment minces pour qu'elles fondent au contact de la matière plastique de l'ébauche et se mélangent à elle au cours du moulage par compression de ladite ébauche.

Enfin, ce procédé peut être généralisé à la fabrication d'assemblages autres que les tubes souples, à savoir des assemblages de pièces en matière (s) plastique (s) dont au moins une pièce possède une partie qui est soudée de façon autogène à une dernière pièce au cours du moulage de cette dernière pièce ou encore emprisonnée par la matière plastique de ladite dernière pièce. Il suffit de munir l'un et/ou l'autre des outillages de moulage par compression animés d'un mouvement d'ensemble continu avec des pièces déjà réalisées et dont certaines parties débordent de telle sorte que quand les outillages de moulage sont accolés, ils définissent une cavité de moulage dans laquelle ces parties sont emprisonnées. Les parties débordantes peuvent être des parties suffisamment minces pour qu'elles fondent au contact de la matière plastique de l'ébauche destinée à réaliser la dernière pièce et se mélangent avec ladite matière plastique au cours du moulage par compression de ladite ébauche. Mais les parties débordantes peuvent également être des parties massives saillantes, en forme de queue d'aronde ou de toute autre forme d'ancrage, de telle sorte qu'elles restent emprisonnées par la matière plastique de la dernière pièce après moulage de cette dernière par compression.

Les différentes pièces de l'assemblage peuvent être réalisées dans le même matériau ou dans des matériaux compatibles en fusion si on cherche une soudure autogène lors du moulage par compression. Ils peuvent être également incompatibles en fusion et dans ce cas, on cherchera un piégeage de certaines parties des pièces déjà réalisées par la matière plastique de la pièce moulée par compression.

On peut également remplacer le moulage par compression par une simple conformation d'une des pièces de l'assemblage qui est en un matériau polymérique possédant des propriétés adhésives. De préférence cette pièce est une pièce intermédiaire entre deux pièces déjà moulées comme l'ébauche torique destinée à constituer la zone frontière entre tête et jupe décrite dans US 6 068 717. Les outillages de conformation sont identiques au outillages de compression décrits précédemment. L'alimentation des outillages et la mise en place des pièces sur ces outillages est également identique. Comme matière polymérique ayant des propriétés adhésives, on peut choisir une polyoléfine modifiée avec des radicaux butyle ou butylène.

### MODES DE REALISATION PARTICULIERS DE L'INVENTION

Dans les modes de réalisation préférés de l'invention présentés ci-après, la deuxième zone est occupée par un dispositif comportant le troisième moyen de transfert, ce dernier animant autant le mouvement des poinçons que celui des matrices. Ledit dispositif est illustré par les figures 1, 2, 3 et 11. Les figures 4 à 8 illustrent les différentes étapes du chargement, de la compression et du déchargement. Les figures 9 à 11 illustrent divers moyens permettant d'obtenir et de placer une ébauche dans l'entrefer des outillages de moulage.

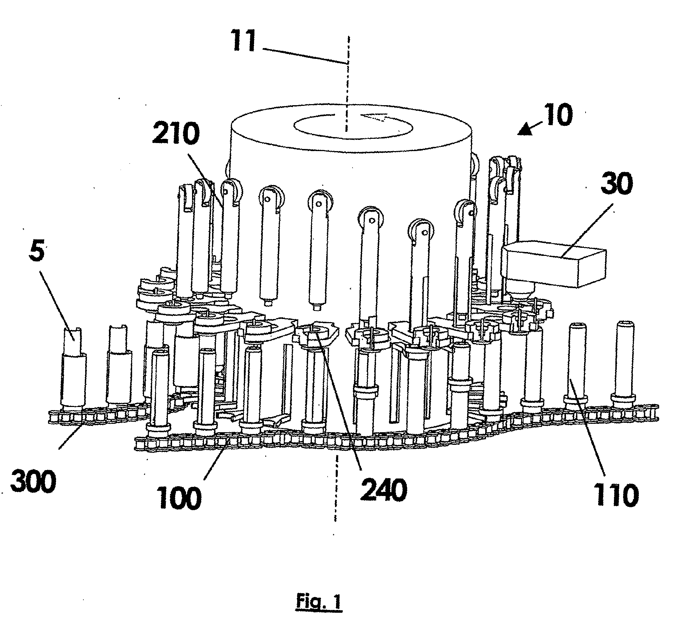

La figure 1 illustre en vue perspective une rotative occupant la deuxième zone d'un atelier selon l'invention, avec au premier plan une partie de la chaîne d'alimentation des jupes entrant, défilant et sortant de la zone de chargement et au deuxième plan une partie la chaîne à godets munis des tubes en sortie de la zone de déchargement.

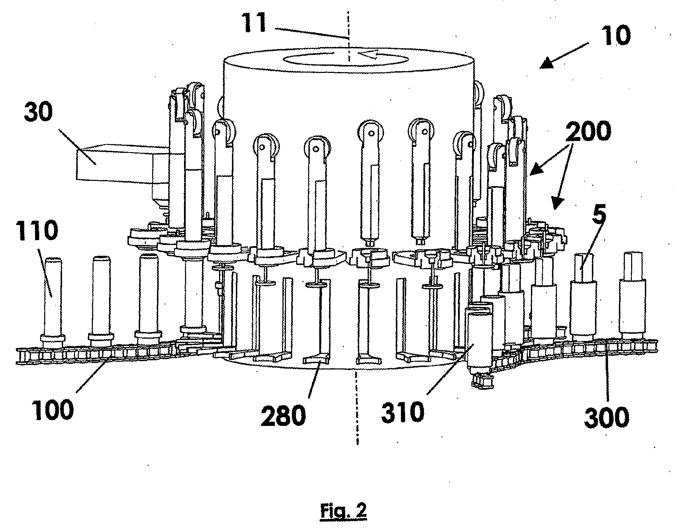

La figure 2 illustre en vue perspective la rotative de la figure 1, observée à partir d'un point à peu près diamétralement opposé au point d'observation de la figure 1, avec à gauche une partie de la chaîne d'alimentation des jupes, à droite une partie de la chaîne à godets recueillant les tubes et, au milieu, la partie de la rotative consacrée au moulage par compression des têtes sur les jupes.

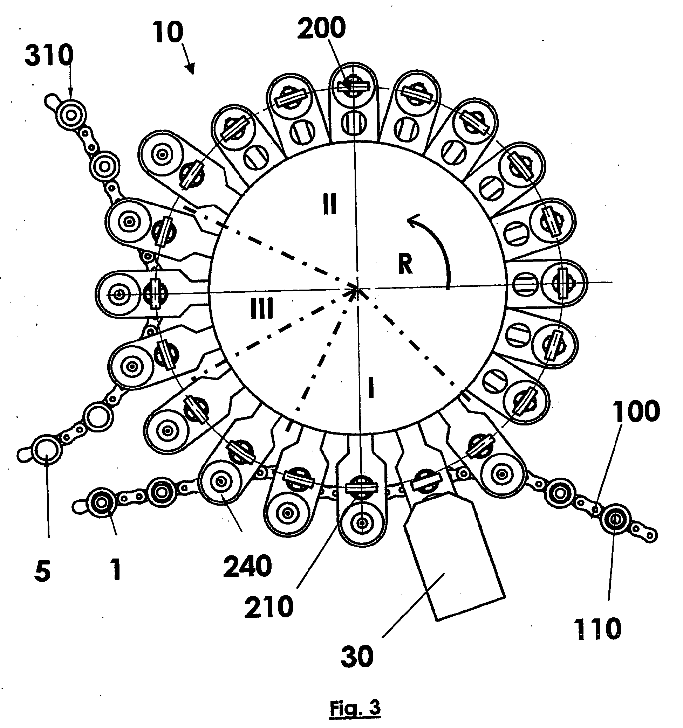

La figure 3 illustre en vue de dessus cette même rotative, les chaînes d'alimentation des jupes et de transfert des tubes.

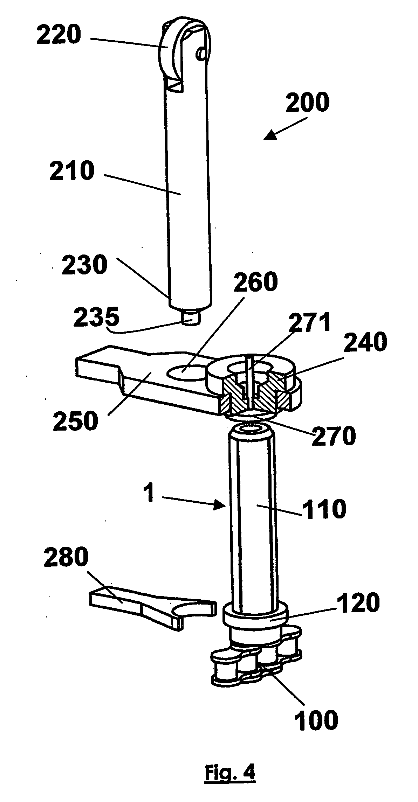

La figure 4 détaille les divers éléments intervenant lors de la compression de la tête sur la jupe. Dans cette figure, comme dans les suivantes, la jupe, la matrice et le tube réalisés sont représentés avec un quartier enlevé de façon à pouvoir illustrer l'intérieur de la matrice, la tige de la broche de perforation et, éventuellement, le poinçon.

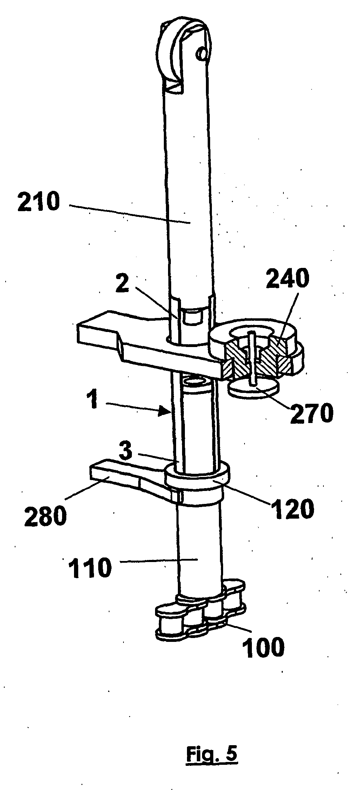

Les figures 5 à 8 illustrent différentes étapes de la compression:
La figure 5 présente l'emmanchement de la jupe autour du poinçon.

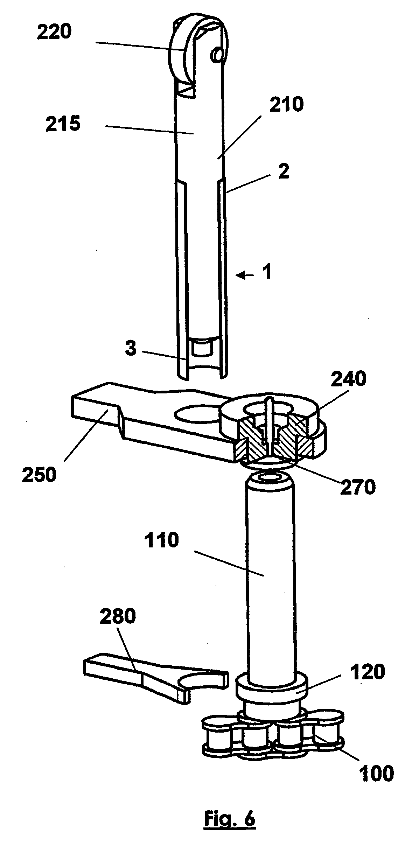

La figure 6: présente l'ensemble des outillage au moment de la dépose de l'ébauche dans la matrice

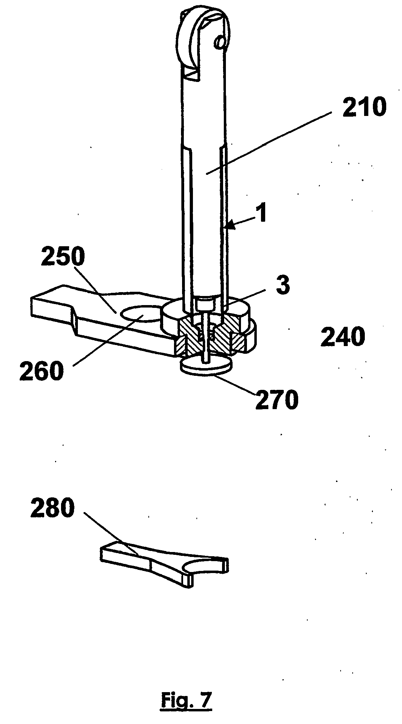

La figure 7 illustre le début de la compression

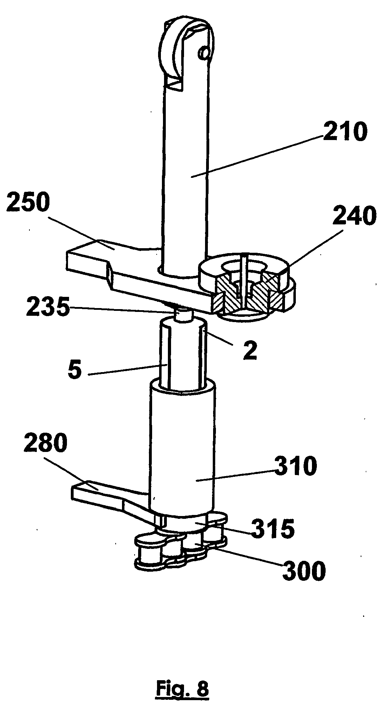

La figure 8 présente le tube obtenu lorsqu'il est éjecté dans un godet.

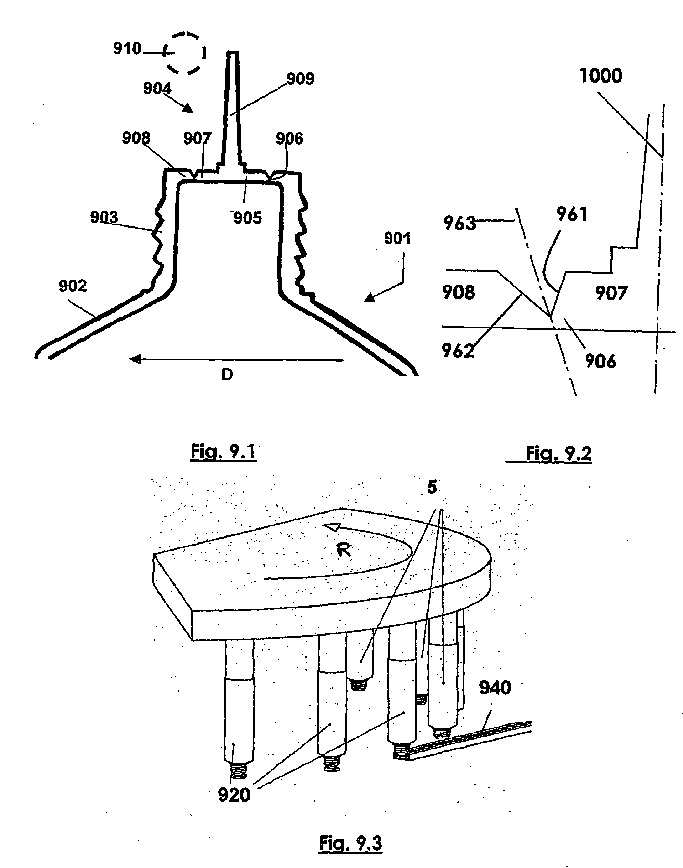

La figure 9.1 illustre la forme de la tête de tube obtenue dans l'exemple 2: une fois moulée par compression, celle-ci ne présente pas un orifice mais un voile muni d'une zone sécable telle qu'après déchirure de ladite zone sécable, on obtient un orifice délimité par un bord net et sans bavure.
La figure 9.2 montre en détail une coupe de ladite zone sécable.
La figure 9.3 illustre d'autre tubes ayant une tête différente de celle présentée en 9.1 et présentant un opercule en forme de T qui est piégé dans un rail non tangent à sa trajectoire.

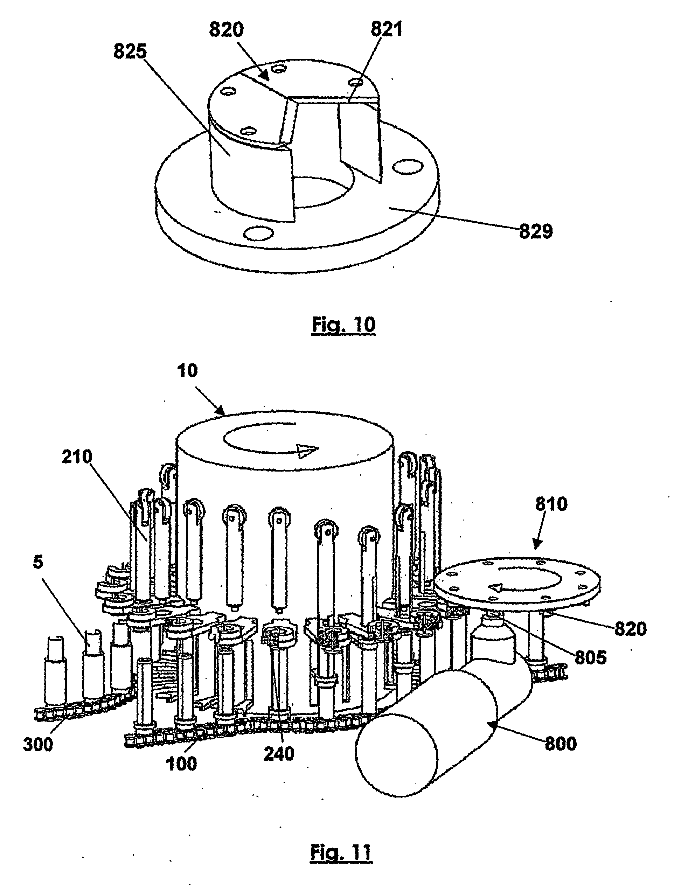

La figure 10 illustre la lame en forme de V qui sert également de réceptacle utilisée dans l'exemple 3
La figure 11 illustre le dispositif de transfert utilisé dans l'exemple 3

### EXEMPLE 1 (Figures 1 à 8)

L'atelier comprend trois zones opérationnelles distinctes, dont seule la seconde est illustrée aux figures 1 à 3.

La première zone est affectée à la fabrication des jupes **1.** Le long manchon cylindrique, de diamètre 30 mm, est réalisé par soudure longitudinale des bords roulés d'un ruban en structure multicouche à effet barrière PE.BD / PE.HD / EAA / EVOH / EAA / PE.BD que l'on fait défiler continûment. Le ruban est déjà imprimé et les jupes **1** sont découpées au défilé à la longueur voulue, 160 mm, en respectant la position du décor imprimé. Elles sont ensuite emmanchées autour des mandrins de chargement **110** du premier moyen de transfert **100** qui est une chaîne à mandrins de chargement.

La deuxième zone comprend un dispositif de fabrication des ébauches **30** et une rotative **10** mettant en un mouvement circulaire continu **R** l'ensemble des dispositifs de moulage **200,** comprenant les mandrins **210** et les matrices **240** et les moyens de chargement **280** et les moyens de déchargement.

La troisième zone est occupée par une installation de bouchonnage.

Le premier moyen de transfert **100** est une chaîne à mandrins de chargement **110.** Elle transfère en mouvement continu les jupes **1** de la première zone vers la deuxième zone.

Le second moyen de transfert **300** est une chaînes à godets **310.** Elle transfère en mouvement continu les tubes **5** de la deuxième zone vers la troisième zone.

La deuxième zone comprend un troisième moyen de transfert: la rotative **10** qui transfère les poinçons **210** en un mouvement continu synchronisé avec celui de la chaîne à mandrins **100** et avec celui de la chaîne à godets **300.** La deuxième zone comprend également des moyens de chargement **280,** chargeant les jupes **1** sur les poinçons **210,** associés au mouvement synchronisé de la rotative **10** et de la chaîne à mandrins de chargement **100,** et des moyens de déchargement, libérant les poinçons des tubes **5** qui les coiffent, associés au mouvement synchronisé de la rotative et de la chaîne à godets **300.**

La rotative **10** tourne autour d'un axe vertical **11** et comprend un certain nombre de dispositifs de moulage **200** (20 en l'occurrence) qui se déplacent selon un mouvement global de rotation **(R).** Les axes des jupes **1,** les axes des poinçons **210,** les axes des matrices **240** et les axes des tubes **5** restent parallèles entre eux et à l'axe de rotation **11** correspondant au mouvement circulaire continu commun **R.** Les poinçons **210** peuvent se déplacer axialement vers la matrice **240** en vue du moulage de la tête ou en sens contraire pour libérer le tube **5** ainsi réalisé. La matrice **240** peut se déplacer radialement pour recueillir l'ébauche **20** sur un diamètre donné, différent de celui du cylindre sur lequel s'appuie la trajectoire du poinçon. Le moyen de chargement de la jupe **1** sur le poinçon **210** est une fourchette de chargement **280,** agissant comme un pousseur sur un vêtisseur **120** solidaire du mandrin de chargement **110** de la chaîne à mandrins de chargement **100.** Cette fourchette **280** est actionnée pour se déplacer axialement en direction du poinçon **210** alors que la matrice **240** se trouve sur un diamètre différent pour recueillir une ébauche **20** extrudée.

Les poinçons **210** peuvent être translatés axialement par l'intermédiaire de suiveurs de came **220,** en l'occurrence des galets, situés aux extrémités des poinçons à l'opposé de leurs têtes **230,** qui suivent au cours de la rotation générale **R** un chemin de came fixe présentant un chemin de roulement non plan, imposant un déplacement du poinçon vers la matrice dans la zone de fabrication des tubes. Le chemin de camé n'est pas représenté directement sur les figures 1 et 2 mais il est matérialisé par les différentes positions des extrémités des poinçons **210.** Un système élastique -également non représenté - permet de maintenir les galets **220** en contact permanent avec le chemin de came. Le poinçon **210** est suffisamment long pour pouvoir présenter, entre l'extrémité de la jupe **1** presque entièrement emmanchée et le galet **220** destiné à suivre le chemin de roulement, une portion cylindrique **215** qui coulisse dans un manchon solidaire de la rotative **10** et qui assure le maintien ferme du poinçon parallèlem,ent à l'axe dé la rotation générale.

Les matrices **240** suivent le même mouvement général de rotation **R**. Portées par des porte-matrices **250** qui peuvent être actionnés radialement, elles peuvent recueillir les ébauches extrudées sur un diamètre différent de celui des poinçons. Pour des raisons d'encombrement, ce diamètre est supérieur au diamètre de la trajectoire des poinçons.

Dans le cas illustré par cet exemple, la matrice **240** recueille au passage une ébauche torique **20** réalisée par une extrudeuse **30** dont la sortie de filière est orientée verticalement. Une broche de perforation **270** comporte une tige axiale **271** qui facilite le centrage de l'ébauche torique dans l'empreinte de la matrice **240** et aide à la mise en forme de l'orifice de distribution ménagé à l'extrémité extrémité du goulot. La tige coulisse dans l'alésage de la matrice et le frottement de la tige dans l'alésage est suffisant pour maintenir la broche **270** solidaire de la matrice **240.** Un alésage peu profond est également ménagé dans l'extrémité centrale **235** de la tête **230** du poinçon **210.** De la sorte, au début de la compression, l'extrémité supérieure de la tige **271** de la broche de perforation **270** entre à l'intérieur de cet alésage, ce qui permet d'avoir après moulage un goulot présentant un orifice de distribution au contour net et sans voile résiduel.

Entrant dans l'aire de fabrication, les porte-matrices sont actionnés de telle sorte qu'ils effectuent un mouvement radial centripète. Les matrices sont ainsi ramenées à la verticale des poinçons. La compression s'effectue par abaissement vertical du poinçon en direction de la matrice. L'ensemble porte-matrice et matrice défile au-dessus d'une rampe qui va servir d'appui tout au long du parcours pendant lequel s'effectue la compression.

Un trou **260** de diamètre supérieur à celui des jupes est ménagé dans le porte-matrice de façon à ce que la jupe **1** puisse être emmanchée, à l'aide d'une fourchette de chargement **280** autour du poinçon **210** tandis que la matrice **240** recueille l'ébauche **20** en matière plastique. Dans la zone de chargement, un vêtisseur **120** coulissant librement autour du mandrin de chargement **110** s'engrène dans l'espace concave de la fourchette de chargement **280.**

On impose un mouvement circulaire **R** continu commun qui fait passer le poinçon **210 ,** le porte-matrice **250,** la matrice **240** et la fourchette de chargement **280** successivement dans l'aire de chargement des jupes **(I),** ensuite dans l'aire de fabrication des tubes par moulage des têtes sur les jupes **(II),** puis dans l'aire de déchargement **(III)** des tubes ainsi réalisés pour retourner dans un nouveau cycle vers l'aire de chargement des jupes (**I**).

Dans l'aire de fabrication des tubes **(II),** plusieurs dispositifs de moulage **200** comprennent chacun une matrice **240** déjà munie de l'ébauche extrudée (non représentée sur les figures) et un poinçon **310** déjà équipé d'une jupe **1** emmanchée autour dudit poinçon, une de ses extrémités dépassant légèrement de la tête **230** dudit poinçon.

La tête **230** du poinçon **210** a une forme destinée à définir la surface intérieure de la tête de tube. L'empreinte de la matrice définit la surface extérieure de la tête. Lorsque le poinçon **210** et la matrice **240** sont accolés; ils définissent une cavité de moulage où l'extrémité de la jupe est emprisonnée. La matière plastique de l'ébauche - sous l'effet du rapprochement du poinçon **210** et de matrice **240 -** vient au contact de l'extrémité **3** de la jupe qui déborde du mandrin **210.** Les matières plastiques de la tête et de la jupe se soudent intimement entre elles sans autre apport de chaleur ou de matière.

La chaîne **100** à mandrins de transfert **110** et la chaîne **300** à godets **310** ont un mouvement synchronisé en ce sens qu'il permettent de débiter un même flux de jupes et de tubes et qu'il n'y a ni accumulation ni épuisement du lot de jupes (donc de tubes) traversant la seconde zone. Le mouvement de la chaîne **100** à mandrins de transfert **110 ,** de la chaîne **300** à godets **310** et de la rotative **10** sont continus en ce sens qu'en aucun moment, notamment pendant le chargement des jupes, pendant la compression de la tête et pendant le déchargement des tubes, les jupes ou les tubes ne sont maintenus immobiles. Dans le cas présent, le mouvement des matrices **240** est également continu et suit le mouvement général imposé par la rotative **10.**

La deuxième zone comprend une aire de chargement **(I)** dans laquelle des moyens de chargement **280** transfèrent en un mouvement continu les jupes **1** de telle sorte qu'elles quittent la chaîne **100** à mandrins de chargement **110** et qu'elles s'emmanchent autour des poinçons **210** animés du mouvement **R** imposé par la rotative **10.**

La synchronisation du mouvement continu des poinçons **210** avec celui de la chaîne **100** est telle que, dans l'aire de chargement **(I),** les poinçons **210** et les jupes **1** suivent des trajectoires parallèles tandis que leurs axes arrivent sensiblement en coïncidence. Lorsqu'ils arrivent sensiblement en coïncidence, une fourchette de chargement **280** attachée à la rotative **10**, vient s'engrener autour d'un vêtisseur **120,** qui est un anneau coulissant le long du mandrin de chargement **110** et sur lequel est posée la jupe **1.** Elle est actionnée verticalement vers le haut et pousse te vêtisseur **120** de telle sorte que la jupe **1** suit un mouvement relatif de translation axiale en direction du poinçon **210.** La jupe 1 s'emmanche avec un faible jeu autour le poinçon par sa première extrémité ouverte **2,** ladite translation relative étant stoppée lorsque ladite jupe est presque entièrement emmanchée autour du poinçon, sa deuxième extrémité **3,** destinée à être soudée à la tête du tube , débordant de la tête **230** du poinçon.

La deuxième zone comprend également une aire de déchargement **(III)** dans laquelle des moyens de déchargement transfèrent en un mouvement continu les tubes emmanchés autour des poinçons, animés du mouvement imposé par la rotative **10,** vers la chaîne **300** à godets **310.** Les fourchettes de chargement **280,** inactive dans cette aire, s'engrènent autour de la base rétrécie **315** des godets.

La synchronisation du mouvement continu de la rotative **10** avec celui de la chaîne **300** à godets **310** est telle que, dans l'aire de déchargement (**III**), les poinçons **210** munis des tubes **5** et les godets **310** suivent des trajectoires parallèles tandis que leurs axes arrivent sensiblement en coïncidence. Lorsqu'ils arrivent sensiblement en coïncidence, on insuffle de l'air sous pression dans une canalisation ménagée dans le poinçon **210,** qui débouche en un endroit de la tête **230** du poinçon **210.** Une surpression s'exerce sur la face interne de la tête de tube, suffisante pour détacher ladite tête de tube de la tête **230** du poinçon puis éjecter le tube **5** axialement en direction du godet **310.**

Le mode de réalisation particulier illustré dans cet exemple est un prototype, destiné à vérifier les fonctionnalités des différentes parties de l'atelier et notamment de la rotative 10. Ce prototype n'a pas été conçu pour atteindre des cadences de fabrication importante mais nous décrivons par la suite les différentes actions envisagées pour atteindre des cadences de l'ordre de 350 tubes/minute.

Muni de 20 poinçons qui se déplacent sur un diamètre de 600 mm, tournant à la vitesse de 6 tours/mn, la rotative **10** de cet exemple permet de réaliser 130 tubes par minute.

L'ébauche, en PE.BD, est réalisée à l'aide d'une extrudeuse à vis avec sortie verticale orientée vers le bas. Elle a une forme torique de diamètre extérieur 20 mm et de diamètre interne légèrement supérieur à 10 mm. Elle pèse environ 3 grammes. Elle est déposée dans l'empreinte de la matrice qui défile sur une trajectoire circulaire de diamètre 700 mm pour prendre au défilé ladite ébauche.

Le maintien sous pression de l'outillage de moulage et la durée de refroidissement durent environ 5 s

Pour atteindre des cadences plus élevées, on peut disposer plusieurs rotatives de même type que la rotative décrite ci-dessus et travaillant en parallèle. On peut également concevoir un rotative plus importante. Par exemple, une rotative munie de 40 dispositifs de moulages, les poinçons se déplaçant sur un diamètre de 1300 mm, permettrait d'obtenir une cadence de 350 tubes/mn.

A cette cadence, il faut remplacer le système de mise en place des ébauches par un système plus complexe, par exemple une rotative entraînant 4 extrudeuses sur un diamètre de 600 mm et tournant à 20 tours/mn , chaque extrudeuse étant susceptible de se déplacer radialement, de telle sorte que la filière et la matrice puissent défiler l'une au-dessus de l'autre à la même vitesse sur une longueur d'au moins 50 mm.

Optionnellement, la troisième zone peut être également équipée d'une rotative munie de dispositifs de moulage par compression semblable à celle présentée dans l'exemple ci-dessus, mais qui serait consacrée au surmoulage par compression des capsules de bouchage, selon le procédé décrit dans le brevet français FR2821288 de la demanderesse.

Une deuxième chaîne à godets vient recueillir les tubes **5** tels qu'ils sont contenus dans les godets **310** de façon à ce que les tubes se présentent avec leur extrémité ouverte orientée vers le haut dans la zone de chargement. Une fourchette de chargement semblable à la fourchette **280 -** mais avec des dimensions différentes adaptées au tube - vient prendre le tube par son épaule et lui impose un mouvement de translation relative vers un poinçon semblable au poinçon **210** décrit précédemment. La matrice, dont l'empreinte définit la surface extérieure du bouchon est alimentée avec une ébauche ayant une simple forme de noix, prélevée au défilé en sortie d'une filière d'extrusion. Le rapprochement du poinçon et de la matrice se traduit par une compression de la noix en matière plastique entre l'empreinte de la matrice et la surface extérieure du goulot qui vient d'être moulé. La capsule est ainsi réalisée par surmoulage, la surface du goulot participant à la définition de la cavité de moulage. Le goulot et la capsule, par exemple munis de filets complémentaires de vissage courts et peu profonds, offrent la possibilité d'avoir un bouchage particulièrement étanche et facile à dévisser.

Enfin, ces opérations de surmoulage du bouchon sur la tête ne nécessitant aucune intervention à l'intérieur du tube, on peut envisager non pas d'équiper la troisième zone mais la deuxième zone d'une rotative supplémentaire. Dans un tel cas, le troisième moyen de transfert serait une chaîne transportant les poinçons de la rotative fabriquant les tubes à celle fabriquant les bouchons. Cela permet d'éviter les opérations inutiles de déchargement, de transfert d'une chaîne à godets à une autre chaîne à godets pour retourner les tubes puis de chargement desdits tubes sur une nouvelle chaîne à mandrins de chargement, cette dernière amenant les tubes vers l'aire de chargement de la rotative destinée au surmoulage des capsules. Par contre, la chaîne s'allonge et le nombre de poinçons mus par le troisième moyen de transfert est plus élevé.

### EXEMPLE 2 (Figures 1 à 8 et Figure 9.1 et 9.2; variante Figure 9.3)

L'atelier de cet exemple présente tous les moyens présentés dans l'exemple prototype précédent à l'exception de l'aire de fabrication des tubes (II) qui a été légèrement aménagée pour simplifier la mise en place de l'ébauche et améliorer ainsi les cadences de fabrication obtenues.

Dans cet exemple, le poinçon et la matrice présentent des empreintes telles que la tête **901** ainsi moulée a un goulot **903** dont l'extrémité supérieure est surmontée d'un opercule **904** qui présente au moins une paroi transversale **905** qui comprend une zone sécable **906** dont le contour fermé délimite la forme désirée de l'orifice et qui est entourée de deux zones aptes à résister à l'effort mécanique nécessaire pour rompre ladite zone sécable; l'une **907** d'entre elles étant destinée à transmettre ledit effort mécanique et l'autre **908** à servir d'appui.

Une partie **909** de l'opercule **904** a une forme de bâtonnet axial. Une fois la matrice dégagée, le tube ainsi réalisé et muni dudit opercule est solidaire du poinçon **210** et se déplace en un mouvement continu sur la rotative **10.** II suffit alors de placer un simple doigt immobile dont une extrémité (symbolisée par le rond en tireté **910)** est située sur la trajectoire de l'extrémité du bâtonnet **909.** Ce doigt est placé à une distance telle que la zone sécable **906** peut être refroidie jusqu'à une température voisine de 100°C. Lorsque la tête de tube **901** arrive à cette position (il suffit de quelques secondes), l'extrémité du bâtonnet est ainsi immobilisé par le doigt tandis que la base du bâtonnet poursuit son mouvement continu solidaire du mouvement de la rotative **10.** Il en résulte une flexion imposée au bâtonnet **909** qui est transmise à la paroi transversale **905** qui lui est perpendiculaire. Sous l'effet de cette flexion, la zone sécable **906** se rompt et l'opercule est éjecté. L'opercule suit alors une trajectoire tangentielle qui l'éjecte en dehors de la zone de la rotative et est récupéré dans un bac.

La rupture se fait d'autant plus proprement que la vitesse de défilement devant le doigt immobile est élevée. Nous avons observé qu'avec une vitesse de défilement de l'ordre de 0,8 m/s on obtenait de très bons résultats.

La zone sécable **906** est située sur la paroi transversale **905.** Elle est entaillée avec une entaille dont la section est orientée suivant une direction peu inclinée par rapport à l'axe du goulot. L'entaille a de préférence une forme en V, la bissectrice du V est peu inclinée par rapport à l'axe **1000** du goulot et décrit un cylindre ou un cône ayant un angle au centre inférieur à 90°. L'angle du V est compris entre 30 et 90°, typiquement entre 40 et 50°. Le V ne présente pas obligatoirement ses branches de façon symétrique autour de sa bissectrice **963.** Ladite bissectrice **963** fait un angle compris entre 0 et 45° avec l'axe dudit goulot. Dans cet exemple particulier, la zone sécable est entaillée avec une entaille en forme de V, avec une branche interne **961** qui fait avec l'axe **1000** un angle inférieur à 5°, une branche externe **962** qui fait avec ledit axe un angle inférieur à 55° et la bissectrice **963** du V qui fait un angle de 25° avec l'axe **1000** du goulot.

Dans cet exemple particulier, la tête **901** est moulée avec du polyéthylène haute densité. Son goulot **903** a un diamètre externe de 11,5 mm et une épaisseur moyenne de 1,5 mm (hors filet de vissage). Le voile transversal a, en dehors de la zone sécable, une épaisseur voisine du millimètre. Le bâtonnet **909** a une hauteur de 10 mm, l'épaisseur résiduelle du voile au niveau de la zone sécable est de 0,3 mm.

Une fois l'opercule éjecté, le goulot **903** présente un orifice sans bavure ni déformation locale de 7 mm de diamètre.

L'opercule peut en fait avoir d'autres formes qui coopèrent avec un élément immobile, tout au moins ne suivant pas le mouvement continu d'ensemble, de telle sorte que la rupture est déclenchée par la différence de mouvement entre cet élément et le troisième moyen de transfert. Ainsi, la figure 9.3 illustre des tubes **920** obtenus avec une tête présentant un opercule axisymétrique avec section en forme de T renversé, de telle sorte que l'opercule présente une gorge annulaire. Après moulage de la tête, les matrices sont retirées et les tubes restent solidaires des poinçons. L'enlèvement des opercules est réalisé par un simple piégeage des extrémités des opercules en T, leur gorges annulaires venant s'emboîter dans un rail **940** immobile et non tangent à la trajectoire des têtes de tube résultant du mouvement R de la rotative **10** et du mouvement axial éventuel des poinçons **210.** Après enlèvement des opercules, les tubes **5** ont un tête avec un orifice de distribution présentant un bord net.

### EXEMPLE 3 (Figures 1 à 8 et Figures 10 et 11)

Comme dans l'exemple précédent, l'atelier présente les mêmes caractéristiques que celles de l'exemple 1, seule diffère l'aire de fabrication des tubes (II) aménagée pour simplifier la réalisation et mise en place de l'ébauche et améliorer ainsi les cadences de fabrication.

On réalise à l'aide de l'extrudeuse **800** immobile un extrudat **805** cylindrique épais que l'on vient cisailler à une hauteur telle que l'on obtient la quantité de matière voulue pour obtenir la tête de tube.

Le cisaillement est réalisé au défilé à l'aide d'une lame **821,** solidaire du quatrième moyen de transfert, et réalisée dans un récipient ouvert **825.** Cette lame a typiquement une forme en V, l'angle du V étant compris de préférence entre 80° et 120° (dans ce cas particulier, il est voisin de 100°). Une telle forme de lame permet de cisailler l'extrudat tout en obtenant une ébauche torique peu déformée. Nous dirons par la suite que cette ébauche est sensiblement torique: il n'y a pas à proprement parler d'axisymétrie en raison de l'aplatissement dû au cisaillement mais l'ovale reste peu marqué de telle sorte que l'ébauche ainsi réalisée peut s'emmancher facilement autour de la protubérance du poinçon destinée à réaliser l'intérieur du goulot. Pour améliorer cette forme, il est possible de prévenir l'effet de l'aplatissement en donnant à l'extrudat tubulaire une section non pas circulaire mais elliptique, le grand axe de l'ellipse se trouvant dans la direction du déplacement de la lame.

Cette lame fait également office de réceptacle **820** après cisaillement de l'extrudat et recueille l'ébauche torique ainsi obtenue le temps nécessaire de son transfert vers les outillages de moulage par compression.

La tourelle **810** fait office de quatrième moyen de transfert et transfère en un mouvement continu les réceptacles intermédiaires **820** qui recueillent les ébauches extrudées en un mouvement continu synchronisé avec la rotative **10** qui fait office de troisième moyen de transfert et l'on procède à la mise en place, par gravité et avec l'aide d'un jet d'air, dans l'entrefer compris entre les outillages de moulage, c'est-à-dire dans l'empreinte de la matrice ou autour d'une protubérance centrale du poinçon.

### AVANTAGES

■ toutes les opérations de mise en forme du tube s'effectuent avec des outillages mobiles, ce qui permet de fabriquer les tubes sans temps mort et de dépasser des cadences de 300 tubes/mn. Ces cadences peuvent augmenter notablement si l'alimentation en ébauches peut se faire avec un quatrième ou cinquième moyen de transfert.
■ dispositifs plus simples, moins bruyants, plus, faciles à concevoir, plus économiques à maintenir; cet avantage est déjà appréciable avec des cadences semblables à celles obtenues avec les installations de l'art antérieur.
■ plus grande souplesse dans la conduite du procédé de fabrication: dans les procédés de l'art antérieur, les étapes de fabrication étaient effectuées en mouvement discontinu avec des temps d'arrêt imposés, difficiles à moduler. Il fallait indexer les installations travaillant "step-by-step", avec des pièces mécaniques lourdes, les durées des opérations statiques étant obligatoirement des multiples du plus grand temps d'arrêt incompressible. Ici, le mouvement est plus fluide, on peut mieux maîtriser les efforts (profils de cames plus doux). On limite ainsi les contraintes mécaniques engendrées par les divers à coups liés à une fabrication en mouvement discontinu. L'ensemble des dispositifs de l'atelier est ménagé mécaniquement, ce qui améliore leur fiabilité.

**NOMENCLATURE**

| | |
|---|---|
| 1 | jupe |
| 2 | première extrémité de la jupe |
| 3 | deuxième extrémité de la jupe, destinée à être soudée avec la tête du tube |
| 5 | tube |
| 10 | troisème moyen de transfert, rotative |
| 11 | axe de rotation |
| 30 | dispositif de fabrication de l'ébauche et de dépôt desdites ébauches dans l'empreinte des matrices |
| 100 | premier moyen de transfert, chaîne à mandrins de chargement |
| 110 | mandrin de chargement |
| 200 | dispositif de moulage |
| 210 | poinçon |
| 215 | partie coulissante du poinçon |
| 220 | suiveur de came, galet |
| 230 | tête du poinçon |
| 235 | extrémité centrale de la tête du poinçon |
| 240 | matrice |
| 250 | porte-matrice |
| 260 | trou ménagé dans le porte-matrice |
| 270 | broche de perforation |
| 271 | tige axiale de la broche de perforation |
| 280 | moyen de chargement, fourchette de chargement |
| 300 | deuxième moyen de transfert, chaîne à godets |
| 310 | godet |
| 315 | base rétrécie du godet |
| 800 | extrudeuse |
| 805 | extrudat: tube épais |
| 810 | tourelle |
| 820 | cisaille- réceptacle |
| 825 | lame en V |
| 829 | bride de fixation de la cisaille- réceptacle sur la tourelle |
| 901 | tête de tube |
| 902 | épaule |
| 903 | goulot |
| 904 | opercule |
| 905 | voile transversal |
| 906 | zone secable |
| 907 | zone de transmission de l'effort de rupture de la zone sécable, voile transversal |
| 908 | zone d'appui, partie sommitale du goulot |
| 909 | partie de l'opercule en forme de bâtonnet |
| 910 | doigt immobile |
| 920 | tube ayant une tête munie d'un opercule en forme de T renversé |
| 940 | rail piégeant les opercules en forme de T renversé |
| 961 | branche interne de l'entaille en V |
| 962 | branche externe de l'entaille en V |
| 963 | bissectrice de l'entaille en V |
| 1000 | axe du goulot |
| | |
| D | sens et direction du déplacement de la tête 901 |
| R | sens de rotation |
| I | aire de chargement des jupes |
| II | aire de fabrication des tubes |
| III | aire de déchargement des tubes |

## Revendications

1. Procédé de fabrication d'assemblages de pièces en matières plastiques, ledit procédé comprenant les étapes suivantes:
- une première étape dans laquelle au moins une (1) des pièces de l'assemblage, déjà réalisée, est mise en mouvement continu à l'aide d'un premier moyen de transfert (100);
- une seconde étape dans laquelle ladite pièce, appelée première pièce est chargée à l'aide de moyens de chargement (280) sur un des outillages de moulage, une partie de ladite pièce débordant de l'outillage de telle sorte que, quand les outillages de moulage sont accolés, ils définissent une cavité de moulage
dans laquelle ladite partie débordante est emprisonnée, ledit outillage de moulage étant associé à un troisième moyen de transfert (10) animé d'un mouvement continu synchronisé avec le premier moyen de transfert (100),
- une troisième étape dans laquelle les assemblages sont réalisés par moulage d'une pièce intermédiaire dans laquelle la partie débordante de ladite pièce est soudée ou emprisonnée par la matière plastique de la pièce intermédiaire, ladite pièce intermédiaire étant obtenue par compression moulage d'une ébauche, par rapprochement relatif desdits outillages de moulage, lesdits outillages de moulage étant animés d'un mouvement d'ensemble continu correspondant au mouvement du troisième moyen de transfert (10):
- une quatrième étape dans laquelle lesdits assemblages (5) sont déchargés à l'aide de moyens de déchargement sur un deuxième moyen de transfert (300) animé d'un mouvement continu synchronisé avec le troisième moyen de transfert (10),
**caractérisé en ce que** ladite ébauche est obtenue par extrusion puis prélevée, typiquement par cisaillage, et déposée avant compression dans l'entrefer compris entre les outillages de moulage de telle sorte qu'au cours de la compression ladite partie débordante de ladite pièce est soudée de façon autogène ou emprisonnée par la matière plastique de la ladite pièce intermédiaire.

2. Procédé de fabrication selon la revendication 1, dans lequel ledit assemblage est un tube souple (5) comportant, en tant que première pièce, une jupe (1) et, en tant que pièce intermédiaire une tête munie d'un goulot et d'une épaule reliant ledit goulot à ladite jupe, ledit procédé comprenant les étapes suivantes:
une première étape dans laquelle des jupes (I) sont animées d'un mouvement continu à l'aide d'un premier moyen de transfert (100);
- une seconde étape dans laquelle lesdites jupes sont chargées à l'aide de moyens de chargement (280) sur des poinçons (210) associés à un troisième moyen de transfert (10) animé d'un mouvement continu synchronisé avec le premier moyen de transfert (100), une des extrémités (3) des jupes (1) dépassant légèrement des poinçons (210);
- une troisième étape dans laquelle les tubes souples sont réalisés par moulage de la tête avec soudure sur une extrémité (3) de la jupe, la tête étant obtenue par compression moulage d'une ébauche, par rapprochement relatif du poinçon (210) muni de la jupe et d'une matrice (240), ledit poinçon et ladite matrice définissant lorsqu'ils sont accolés une cavité de moulage où l'extrémité de la jupe est emprisonnée, ledit poinçon et ladite matrice étant animés d'un mouvement d'ensemble continu correspondant au mouvement du troisième moyen de transfert (10),
- une quatrième étape dans laquelle lesdits tubes (5) sont déchargés a raide de moyens de déchargement sur un deuxième moyen de transfert (300) animé d'un mouvement continu synchronisé avec le troisième moyen de transfert (10).
**caractérisé en ce que** ladite ébauche est obtenue par extrusion puis prélevée, typiquement par cisaillage, et déposée avant compression, à l'aide d'un quatrième moyen de transfert (810) animé d'un mouvement continu synchronisé avec le troisième moyen de transfert (10), dans l'entrefer de l'outillage de moulage, typiquement dans l'empreinte de la matrice (240) ou sur l'extrémité du poinçon (210), de tell sorte qu'au cours de la compression la matière plastique de l'ébauche arrive au contact de l'extrémité de la jupe (1) et que les matières plastiques de l'ébauche et de la jupe se soudent intimement entre elles sans autre apport de chaleur ou de matière.

3. Procédé de fabrication de tubes souples selon la revendication 2 dans lequel ladite extrusion est réalisée avec des moyens mus par un quatrième moyen de transfert synchronisé avec le troisième moyen de transfert, imposant localement aux dits moyens d'extrusidn une trajectoire parallèle à celle des poinçons ou à celle des matrices destiné(e)s à recueillir les ébauches, l'axe d'extrusion venant sensiblement en coïncidence avec l'axe de l'outilicige récepteur, sur une longueur suffisante pour que la quantité de matière plastique désirée puisse être extrudée.

4. Procédé de fabrication de tubes souples selon la revendication 2 dans lequel l'extrusion est effectuée avec une extrudeuse immobile et où un ou plusieurs quatrième(s) moyen(s) de transfert fransfère(nt) en un mouvement continu des réceptacles intermédiaires qui recueillent les ébauches au défilé.

5. Procédé de fabrication de tubes souples selon la revendication 4 dans lequel on extrude un extrudat en forme de tube cylindrique épais puis on le cisaille de telle sorte que l'ébauche présente une forme sensiblement torique.

6. Procédé de fabrication de tubes souples selon la revendication 5 dans lequel le cisaillement de l'extrudat est réalisé au défilé par une lame (821) qui est solidaire dudit (ou desdits) quatrième (s) moyen(s) de transfert (810) et sert de réceptacle (820) à l'ébauche ainsi cisaillée.

7. Procédé de fabrication de tubes souples selon la revendication 6 dans lequel on utilise pour le cisaillement de l'extrudat une lame (821) en forme de V, l'angle du V étant de préférence compris entre 80° et 120°.

8. Procédé de fabrication de tubes souples selon l'une quelconque des revendications 5 à 7 dans lequel ladite ébauche sensiblement torique est mise en place, par gravité et/ou avec l'aide d'un jet d'air, soit dans l'empreinte de la matrice (240) soit sur l'extrémité du poinçon (210).

9. Procédé de fabrication de tubes souples selon l'une quelconque des revendications 2 à 4 dans lequel on utilise un poinçon et une matrice dont les empreintes sont dessinées de telle sorte que les têtes de tube ainsi moulées présentent un goulot (903) dont l'extrémité supérieure est surmontée d'un opercule (904) qui présente au moins une paroi transversale (905) qui comprend une zone sécable (906) dont le contour délimite la forme désirée de l'orifice et qui est entourée de deux zones aptes à résister à l'effort mécanique nécessaire pour rompre ladite zone sécable, l'une (907 et 909) d'entre elles étant destinée à transmettre ledit effort mécanique et l'autre (908) à servir d'appui, et dans lequel, après ouverture dudit outillage de moulage par déplacement relatif du poinçon et de la matrice, on enlève ledit opercule par l'application dudit effort mécanique sur une partie de l'opercule séparée de la zone sécable par la zone (907 et 909) apte à transmettre ledit effort mécanique, l'application dudit effort mécanique ayant pour conséquences la rupture de la zone sécable (906) et l'obtention de l'orifice.

10. Procédé de fabrication de tubes souples selon la revendication 9 dans lequel la rupture de la zone sécable (906) est réalisée au cours du refroidissement suivant le moulage, dès que la matière plastique atteint au niveau de la zone sécable une température légèrement inférieure à sa température de transition vitreuse

11. Procédé de fabrication de tubes souples selon la revendication 9 ou 10 dans lequel on utilise un poinçon et une matrice dont les empreintes sont dessinées de telle sorte que l'opercule (904) obtenu a une forme permettant la coopération avec un élément qui ne suit pas le mouvement continu d'ensemble du troisième moyen de transfert (10), de telle sorte que la rupture est déclenchée par la différence de mouvement entre cet élément et ledifi troisième moyen de transfert.

12. Procédé de fabrication d'assemblages de pièces en matières plastiques selon la revendication 1 modifié en ce que lesdits outillages de moulage sont des outillages de conformation et en ce que dans la troisième étape, lesdits outillages de conformation mettent en forme une pièce intermédiaire en matière polymérique adhésive qui adhère aux pièces déjà réalisées.

13. Atelier de fabrication de tubes souples (5) comportant une jupe (1) et une tête munie d'un goulot et d'une épaule reliant ledit goulot à ladite jupe, ledit atelier comportant trois zones opérationnelles distinctes,
- la première zone étant affectée à la fabrication desdites jupes,
- la deuxième zone étant affectée à la fabrication des tubes souples, comportant au moins un dispositif (30) de fabrication d'ébauches (20) en matière plastique comprenant une extrudeuse et plusieurs dispositifs de moulage (200) des têtes par compression desdites ébauches, chaque dispositif de moulage (200) comprenant une matrice (240) et un poinçon (210),
- la troisième zone étant affectée au parachèvement des tubes souples,
ledit atelier comprenant également:
- un premier moyen de transfert (100), muni de supports individualisés, typiquement des tiges, destinés à être emmanchés par lesdites jupes et animé d'un mouvement continu de façon à transporter lesdites jupes de ladite première zone vers ladite deuxième zone,
- et un second moyen de transfert (300) muni de réceptacles, typiquement des godets, destinés à recueillir lesdits tubes et animé d'un mouvement continu synchronisé avec le précédent, de façon à transporter lesdits tubes de ladite deuxième zone vers ladite troisième zone,
ladite deuxième zone comprenant un troisième moyen de transfert (10) muni desdits poinçons (210) et animé d'un mouvement continu synchronisé avec celui du premier moyen de transfert (100) et avec celui du deuxième moyen de transfert (300) et la deuxième zone comprenant également des moyens de chargement (280), associés au mouvement synchronisé desdits premier et troisième moyens de transfert, qui imposent aux jupes un mouvement relatif en direction des poinçons, et des moyens de déchargement, associés au mouvement synchronisé desdits deuxième et troisième moyens de transfert, qui imposent aux tubes un mouvement relatif en direction des réceptacles;
**caractérisé en ce que** ladite deuxième zone affectée à la fabrication des tubes comprend également un moyen de prélèvement des ébauches, typiquement par cisaillage de l'extrudat issu de ladite extrudeuse et un moyen de transfert qui permet de déposer ladite ébauche dans l'entrefer de l'outillage de moulage, typiquement dans l'empreinte de la matrice (240) ou sur J'extrémité du poinçon (210) de telle sorte qu'au cours de la compression la matière plastique de l'ébauche arrive au contact de l'extrémité de la jupe (1) et que les matières plastiques de l'ébauche et de la jupe se soudent intimement entre elles sans autre apport de chaleur ou de matière.

14. Atelier selon la revendication 13 dans lequel ledit premier moyen de transfert (100) est une chaîne à mandrins, lesdits mandrins étant destinés et recueillir lesdites jupes en sortie de la première zone et étant disposés de telle sorte qu'ils imposent à chaque jupe un mouvement tel que l'axe de la jupe reste toujours sensiblement perpendiculaire à sa trajectoire.

15. Atelier selon la revendication 13 ou 14 dans lequel la deuxième zone comporte une aire (I) de chargemerifdes jupes (1) sur les poinçons (210), dans laquelle des moyens de chargement (280) agissent entre le premier moyen de transfert et le troisième moyen de transfert, une aire de fabrication (30) d'ébauches en matière plastique, une aire de fabrication (II) des tubes (5) par moulage par compression des tètes sur les extrémités des jupes emmanchées autour des poinçons, et une aire de déchargement (III) des tubes ainsi réalisés, dans laquelle des moyens de déchargement agissent entre le troisième moyen de transfert et le deuxième moyen de transfert, et où ledit troisième moyen de transfert transfère les poinçons dans l'aire de chargement (I) des jupes, l'aire de fabrication (II) des tubes et l'aire de déchargement (III) des tubes.

16. Atelier selon l'une quelconque des revendications 13 à 15 dans lequel le deuxième moyen de transfert est une chaîne à godets animée d'un mouvement continu de telle sorte que les tubes sont transportés de la deuxième zone vers la troisième zone en étant animés d'un mouvement tel que leur axe reste toujours sensiblement perpendiculaire à sa trajectoire.

17. Atelier selon l'une quelconque des revendications 13 à 16 dans lequel les premier et deuxième moyens de transfert (100, 300) sont également munis de moyens d'accumulation permettant de continuer temporairement une .. opération amont alors qu'une opération ovale ne peut être effectuée.

18. Atelier selon l'une quelconque des revendications 15 à 17 dans lequel, dans ladite aire de chargement, les poinçons (210) et les jupes (1) suivent des trajectoires parallèles tandis que leurs axes arrivent sensiblement en coïncidence et où lesdits moyens de chargement (280) sont attachés audit troisième moyen de transfert (10) imposant aux jupes un mouvement relatif de translation axiale en direction des poinçons de telle sorte que les jupes s'emmanchent avec un faible jeu dans les poinçons par leur première extrémité ouverte, jusqu'à ce que lesdites jupes soient presque entièrement emmanchées autour des poinçons, leur deuxième extrémités, destinée à être soudée à la tête, débordant de la tête du poinçon.

19. Atelier selon l'une quelconque des revendications 15 à 18 dans lequel la deuxième zone comprend plusieurs troisièmes moyens de transfert passant ladite aire de chargement (1) où les moyens de chargement (280) agissent de façon groupée pour alimenter simultanément le poinçon (210) m0 par chaque troisième moyen de transfert (10) avec une jupe (1) du premier moyen de transfert (100).

20. Atelier selon la revendication 19 dans lequel lesdits plusieurs troisièmes moyens de transfert (10) passent par ladite aire de déchargement (III) où les moyens de déchargement agissent de façon groupée pour dévêtir simultanément chaque poinçon (210) de chaque troisième moyen de transfert (10) et alimenter le deuxième moyen de transfert (300) en tubes (5).

21. Atelier selon l'une quelconque des revendications 13 à 20 dans lequel le moyen de chargement (280) est animé d'un mouvement de translation axiale tel qu'il pousse la jupe par une de ses extrémités vers le poinçon (210) et le moyen de déchargement comprend une canalisation ménagée dans le poinçon (210) débouchant en un ou plusieurs endroits de la tête (230) du poinçon et qui est reliée à une source d'air comprimé.

22. Atelier selon l'une quelconque des revendications 13 à 21 comprenant une extrudeuse immobile un moyen de prélèvement des ébauches par cisaillage de l'extrudat issu de ladite extrudeuse et un moyen de transfert qui dépose lesdites ébauches sur un poinçon ou une matrice, au passage de celui-ci ou celle-ci.

23. Atelier selon l'une quelconque des revendications 13 à 22 dans lequel ledit moyen de transfert des ébauches extrudées est aminé d'un mouvement continu synchronisé avec celui du troisième moyen de transfert lorsque les ébauches extrudées sont des dispositifs de moulage.

24. Atelier selon la revendication 23 comprenant plusieurs moyens d'extrusion mus par un quatrième moyen de transfert synchronisé avec, le troisième moyen de transfert et qui est agencé de telle sorte qu'il impose localement aux dits moyens d'extrusion une trajectoire parallèle à celle des poinçons ou à celle des matrices destiné(e)s à recueillir les ébauches, l'axe d'extrusion venant sensiblement en coïncidence avec l'axe de l'outillage récepteur, sur une longueur suffisante pour que la quantité de matière plastique désirée puisse être extrudée.

25. Atelier selon la revendication 23 comprenant une extrudeuse immobile et où un ou plusieurs quatrième(s) moyen(s) de transfert, animé(s) d'un mouvement continu, sont munis de réceptacles intermédiaires qui recueillent les ébauches au défilé.

26. Atelier selon l'une quelconque des revendications 22 à 25 dans lequel ladite ou lesdites extrudeuses permettant de réaliser une ébauche extrudée de forme torique et où ledit moyen de prélèvement est muni d'une broche de perforation (371) dont l'extrémité vient effleurer la filière, se déplaçant par rapport à ladite filière avec un vitesse telle que le temps nécessaire pour parcourir le diamètre interne du trou central de l'ébauche torique correspond à la durée d'extrusion permettant d'obtenir la quantité de matière plastique nécessaire

27. Atelier selon la revendication 23 dans lequel un cinquième moyen de transfert, muni de réceptacles, est animé d'un mouvement discontinu tel que les ébauches extrudées sont déposées dans lesdits réceptacles lorsque ledit cinquième moyen de transfert est à l'arrêt complet et tel que lesdites ébauches extrudées sont extraites desdits réceptacles pour être déposées dans l'entrefer du dispositif de moulage m0 par le troisième moyen de transfert, lorsque ledit cinquième moyen de transport est en mouvement.

28. Atelier selon la revendication 25 comprenant une extrudeuse immobile munie d'une filière permettant d'obtenir un extrudat (805) en forme de tube épais, et dans lequel ledit (ou lesdits) quatrième (s) moyen(s) de transfert (810) est (sont) muni(s) d'une lame (821) qui cisaille ledit extrudat au défilé et qui appartient au réceptacle (820) qui recueille l'ébauche ainsi cisaillée.

29. Atelier selon la revendication 28 dans lequel la lame (821) a une forme de V, l'angle du V êtant de préférence compris entre 80° et 120°.

30. Atelier selon la revendication 28 ou 29 dans lequel ladite ébauche sensiblement torique est mise en place, par gravité et/ou avec l'aide d'un jet d'air, dans l'entrefer compris entre les outillages de moulage.

31. Atelier selon la revendication 22 dans lequel les empreintes desdits poinçons et desdites matrices sont dessinées de telle sorte que les têtes de tube ainsi moulées présentent un goulot (903) dont l'extrémité supérieure est surmontée d'un opercule (904) qui présente au moins une paroi transversale (905) qui comprend une zone sécable (906) dont le contour délimite la forme désirée de l'orifice et qui est entourée de deux zones aptes à résister à l'effort mécanique nécessaire pour rompre ladite zone sécable, l'une (907 et 909) d'entre elles étant destinée à transmettre ledit effort mécanique et l'autre (908) à servir d'appui, et dans lequel, un moyen est prévu, placé sur la trajectoire desdites têtes de tube de telle sorte qu'il permet d'appliquer ledit effort mécanique sur une partie de l'opercule séparée de la zone sécable par la zone (907 et 909) apte à transmettre ledit effort mécanique, l'application dudit effort mécanique ayant pour conséquences la rupture de la zone sécable (906) et l'obtention de l'orifice.

32. Atelier salon la revendication 31 dans lequel ladite zone sécable (906) est entaillée avec une entaille en V, l'angle du V étant compris entre 30 et 90°, de préférence entre 40 et 50°, la bissectrice (963) du V faisant un angle compris entre 0 et 45° avec l'axe (1000) dudit goulot (903).

33. Atelier selon la revendication 31 ou 32, dans lequel ledit moyen d'application de l'effort mécanique est prévu sur la trajectoire des têtes de tube à une distance de la zone de démoulage telle que la rupture de la zone sécable (906) est réalisée au cours du refroidissement suivant le moulage, dès que la matière plastique atteint au niveau de la zone sécable une température légèrement inférieure à sa température de transition vitreuse.

34. Atelier selon l'une quelconque des revendications 31 à 33 dans lequel l'opercule (904) a une forme permettant la coopération avec un élément ne suivant pas le mouvement continu d'ensemble du troisième moyen de transfert (10), de telle sorte que la rupture est déclenchée par la différence de mouvement entre cet élément et ledit troisième moyen de transfert.

35. Atelier selon l'une quelconque des revendications 31 à 34 dans lequel l'opercule (904) comporte une paroi transversale (905) et un bâtonnet (909) et dans lequel un doigt immobile est placé de telle sorte que son extrémité (910) est située sur la trajectoire de l'extrémité du bâtonnet (909) à une distance telle que la zone sécable (906) est refroidie jusqu'à une température voisine de la température de transition vitreuse lorsque la tête de tube (901) arrive à cette position, l'extrémité du bâtonnet étant ainsi immobilisé par le doigt tandis que la base du bâtonnet poursuit son mouvement continu (D) solidaire du mouvement du troisième moyen de transfert (10).

36. Atelier selon l'une quelconque des revendications 31 à 34 dans lequel l'opercule présente une section en forme de T renversé, et dans lequel un rail (940) immobile et non tangent à la trajectoire des têtes de tube (901) est disposé de telle sorte que l'extrémité de l'opercule en T se trouve piègée dans ledit rail lorsque les têtes de tube arrivent au droit dudit rail.

37. Atelier selon l'une quelconque des revendications 13 à 36 **caractérisé en ce que** la deuxième zone est occupée par une rotative (10) comprenant des dispositifs de moulage (200), des moyens de chargement (280) des jupes (1) et des moyens de déchargement des tubes (5), chaque dispositif de moulage (200) comprenant une matrice (240) et un poinçon (210), ladite rotative étant animée d'un mouvement de rotation continu tel que l'ensemble des dispositifs de moulage (200), des moyens de chargement (280) des jupes (1) et des moyens de déchargement des tubes (5) sont mus par un mouvement global circulaire continu, chaque poinçon (210) étant mu par un moyen de translation axiale agissant en une de ses extrémités (220) et chaque matrice (240) étant placée sur un porte matrice (250) mu par un moyen de déplacement radial, ledit porte matrice (250) portant un trou (260) pour laisser passer la jupe (1) lors de son emmanchement autour du poinçon (210), alors que la matrice se déplace sur un diamètre supérieur pour recueillir l'ébauche.

38. Atelier selon la revendication 37 dans lequel ledit moyen de translation axiale est un suiveur de came (220) attaché à l'extrémité du poinçon (210) maintenu par un moyen élastique en contact constant avec le chemin de roulement d'une came fixe, et dans lequel une portion cylindrique (215) du poinçon (210) est introduite dans un manchon qui suit le mouvement global circulaire dudit dispositif, de sorte que ledit manchon maintient ledit poinçon parallèlement à l'axe de rotation (11) de ladite rotative (10).

39. Atelier selon la revendication 37 ou 38 dans lequel le moyen de chargement est une fourchette de chargement (280) associée à un suiveur de came maintenu par un moyen élastique en contact constant avec le chemin de roulement d'une came fixe.

40. Atelier selon l'une quelconque des revendications 37 à 39 dans lequel le moyen de déchargement comprend une canalisation ménagée dans le poinçon et raccordée à une source d'air comprimé.

## Claims

1. Process for manufacturing assemblies of plastic materials, the said process including the following steps:
- a first step in which at least one of the (1) assembly parts, already manufactured, is moved in a continuous movement using a first transfer means (100);
- a second step in which the said so-called first part is loaded with loading means (280) on one of the moulding toolings, one portion of the said part projecting from the tooling such that, when the moulding toolings are brought together, they define a moulding cavity in which the said projecting part is trapped, the said moulding tooling being associated with a third transfer means (10) moved continuously and synchronised with the first transfer means (100);
- a third step in which the assemblies are made by moulding an intermediate part in which the projecting portion of said part is welded or trapped by the plastic material of the intermediate part, the said intermediate part being obtained by compression moulding of a blank, by relative movement of the said moulding toolings, the said moulding toolings being moved in a continuous overall movement corresponding to the movement of the third transfer means (10);
- a fourth step in which the said assemblies (5) are unloaded using unloading means onto a second transfer means (300) moved in a continuous movement synchronised with the third transfer means (10),
**characterised in that** the said blank is obtained by extrusion and then picked up, typically by shearing, and deposited before compression in the air gap between the moulding toolings such that during compression, the said projecting portion of the part is autogenously welded to or trapped by the plastic material of the said intermediate part.

2. Manufacturing process according to claim 1, in which the said assembly is a flexible tube (5) comprising a first part consisting of a skirt (1), an intermediate part consisting of a head fitted with a neck and a shoulder connecting the said neck to the said skirt, the said process including the following steps:
- a first step in which the skirts (1) are moved in continuous movement using a first transfer means (100);
- a second step in which the said skirts are loaded using loading means (280) onto punches(210) associated with a third transfer means (10) moved in a continuous movement synchronised with the first transfer means (100), one of the ends (3) of the skirts (1) projecting slightly beyond the punches (210);
- a third step in which the flexible tubes are made by moulding the head with welding on one end (3) of the skirt, the head being obtained by compression moulding of a blank, by relative movement of the punch (210) fitted with the skirt towards a die (240), the said punch and the said die defining a moulding cavity when they are brought together in which the end of the skirt is trapped, the said punch and the said die being moved in a continuous overall movement corresponding to the movement of the third transfer means (10);
- a fourth step in which the said tubes (5) are unloaded using unloading means onto a second transfer means (300) moved in a continuous movement synchronised with the third transfer means (10),
**characterised in that** the said blank is obtained by extrusion and then picked up, typically by shearing, and deposited in the air gap of the moulding tooling, typically in the cavity of the extrusion die (240) or on the end of the punch (210), before compression using a fourth transfer means (810) moved in a continuous movement synchronised with the third transfer means (10) such that during compression, the plastic material of the blank comes into contact with the end of the skirt (1) and that the plastic materials of the blank and the skirt are intimately welded to each other with no addition of heat or material.

3. Process for manufacturing flexible tubes according to claim 2, in which the said extrusion is made with means moved by a fourth transfer means synchronised with the third transfer means, that locally imposes a path to said extrusion means, parallel to the path of the punches or the dies that will hold the blanks, the extrusion axis being substantially coincident with the axis of the receiving tool over a sufficient length so that the required quantity of plastic material can be extruded.

4. Process for manufacturing flexible tubes according to claim 2, in which the extrusion is made with an immobile extruder and in which one or more fourth transfer means transfer intermediate receptacles containing the blanks in a continuous movement.

5. Process for manufacturing flexible tubes according to claim 4, in which an extrudate in the form of a thick cylindrical tube is extruded and is then sheared such that the blank is in a substantially toroidal shape.

6. Process for manufacturing flexible tubes according to claim 5, in which the extrudate is sheared without stopping using a blade (821) fixed to the fourth transfer means (810) and acts as a receptacle (820) for the blank thus sheared.

7. Process for manufacturing flexible tubes according to claim 6, in which a V-shaped blade (821) is used for shearing the extrudate, the angle of the V preferably being between 80° and 120°.

8. Process for manufacturing flexible tubes according to any one of claims 5 to 7, in which the said substantially toroidal blank is placed by gravity and / or using an air jet, either in the cavity of the die (240) or on the end of the punch (210).

9. Process for manufacturing flexible tubes according to any one of claims 2 to 4 in which a punch and a die are used, the cavities of which are designed such that the tube heads thus moulded have a neck (903) for which the top end is holding a stopper (904) that has at least one transverse wall (905) that includes a frangible area (906) for which the closed contour delimits the required shape of the orifice and that is surrounded by two areas capable of resisting the mechanical force necessary to break the said frangible area, one (907 and 909) of them being designed to transmit the said mechanical force and the other (908) to transmit the thrust, and in which, after the said moulding tooling has been opened by relative displacement of the punch and the die, the said stopper is removed by applying a mechanical force on part of the stopper separated from the frangible area by the area (907 and 909) capable of transmitting the said mechanical force, the consequence of application of the said mechanical force being to break the frangible area (906) and obtain the orifice.

10. Process for manufacturing flexible tubes according to claim 9, in which the frangible area (906) is broken during cooling after moulding, as soon as the plastic material reaches a temperature slightly below its vitreous transition temperature, at the frangible area.

11. Process for manufacturing flexible tubes according to either claim 9 or 10, in which a punch and a die are used, for which the cavities are designed such that the shape of the stopper (904) obtained enables cooperation with an element that does not follow the continuous overall movement of the third transfer means (10), such that the break is triggered by the different movements between this element and the said third transfer means.

12. Process for manufacturing assemblies of plastic materials according to claim 1, modified in that the said moulding toolings are conformation toolings and in that, in the third step, the said conformation toolings conform an intermediate part that is made of an adhesive polymer material that bonds to the parts that have already been manufactured.

13. Workshop for the manufacture of flexible tubes (5) comprising a skirt (1) and a head fitted with a neck and a shoulder connecting the said neck to the said skirt, the said workshop comprising three distinct operational areas,
- the first area being assigned to manufacturing of the said skirts,
- the second area being assigned to manufacturing of flexible tubes, comprising at least one device (30) for the manufacture of blanks (20) made of plastic material, including an extruder and several head moulding devices (200) by compression of the said blanks, each moulding device (200) comprising a die (240) and a punch (210),
- the third area being assigned to finishing of the flexible tubes thus made, the said workshop also comprising:
- a first transfer means (100) provided with individualised supports, typically rods onto which the said skirts will be fitted and moved in a continuous movement so as to transfer the said skirts from the said first area to the said second area,
- and a second transfer means (300) provided with receptacles, typically buckets, that will hold the said tubes, and moved in a continuous movement synchronised with the previous movement, so as to transfer the said tubes from the said second area to the said third area,
the said second area comprising a third transfer means (10) fitted with the said punches (210) and moved in a continuous movement synchronised with the movement of the first transfer means (100) and with the movement of the second transfer means (300) and the second area also comprising loading means (280), associated with the synchronised movements of said first and third transfer means, imposing a relative movement of the skirts towards the punches, and unloading means, associated with the synchronised movement of said second and third transfer means, imposing a relative movement of the tubes towards the receptacles;
**characterised in that** the said second area assigned to manufacturing of tubes also includes a means of picking up the blanks, typically by shearing the extrudate output from the said extruder and a transfer means used to deposit the said blank in the air gap of the moulding tooling, typically in the cavity of the die (240) or on the end of the punch (210) such that during compression, the plastic material of the blank comes into contact with the end of the skirt (1) and that the plastic materials of the blank and the skirt are welded together intimately with no additional heat or material.

14. Workshop according to claim 13, in which the first transfer means (100) is a mandrel chain, the said mandrels being designed to hold the said skirts when they exit from the first area and being arranged such that they impose a movement on each skirt such that the axis of the skirt remains always substantially perpendicular to its path.

15. Workshop according to either claim 13 or 14, in which the second area comprises an area (I) for loading the skirts (1) on the punches (210), in which the loading means (280) act between the first transfer means and the third transfer means, a manufacturing area (30) for plastic blanks, a tube (5) manufacturing area (II) by compression moulding of the heads on the ends of the skirts fitted around the punches, and an unloading area (III) of the tubes thus made, in which the unloading means act between the third transfer means and the second transfer means, and in which the said third transfer means transfers the punches into the skirt manufacturing area (II), the tube manufacturing area (II) and the tube unloading area (III).

16. Workshop according to any one of claims 13 to 15, in which the second transfer means is a bucket chain moved in a continuous movement such that the tubes are transferred from the second area towards the third area, being moved in a movement such that their centreline remains always substantially perpendicular to its path.

17. Workshop according to any one of claims 13 to 16, in which the first and second transfer means (100, 300) are also fitted with accumulation means so that it is possible to temporarily continue one upstream operation although the downstream operation cannot yet be done.

18. Workshop according to any one of claims 15 to 17 in which the punches (210) and the skirts (1) follow parallel paths in the said loading area, while their axes arrive at substantially the same time, and in which the said loading means (280) are associated with the said third transfer means (10), imposing a relative axial translation movement on the skirts towards the punches such that the skirts fit onto the punches with a small clearance through their first open end, until the skirts are almost completely fitted around the punches, their second end designed to welded to the head projecting beyond the head of the punch.

19. Workshop according to any one of claims 15 to 18, in which the second area comprises several third transfer means passing through the said loading area (I) in which the loading means (280) act in a group to supply the punch (210) moved by each third transfer means (10) with a skirt (1) from the first transfer means (100), at the same time.

20. Workshop according to claim 19, in which said several third transfer means (10) pass through the said unloading area (III) in which the unloading means act in a group to uncover each punch (210) of each third transfer means (10) and to supply the second transfer means (300) with tubes (5) at the same time.

21. Workshop according to any one of claims 13 to 20, in which the loading means (280) is moved in an axial translation movement such that it pushes the skirt by one of its ends towards the punch (210) and the unloading means comprises a duct formed in the punch (210), that opens up at one or more locations of the head (230) of the punch and that is connected to a compressed air source.

22. Workshop according to any one of claims 13 to 21, comprising an immobile extruder, a means of picking up blanks by shearing the extrudate output from the said extruder and a transfer means that puts the said blanks onto a punch or a die, while the punch or die is passing.

23. Workshop according to any one of claims 13 to 22, in which the said means of transferring the extruded blanks is moved in a continuous movement synchronised with the movement of the third transfer means, when the extruded blanks are deposited in the air gap of the moulding devices.

24. Workshop according to claim 23 comprising several extrusion means moved by a fourth transfer means synchronised with the third transfer means, and is arranged such that it locally imposes a path parallel to the path of the punches or the dies that will hold the blanks on the said extrusion means, the extrusion axis arriving at substantially the same time as the receiving tool axis over a sufficient length so that the required quantity of plastic material can be extruded.

25. Workshop according to claim 23 comprising an immobile extruder and in which one or more fourth transfer means moved in a continuous movement are fitted with intermediate receptacles that collect the blanks without stopping.

26. Workshop according to any one of claims 22 to 25, in which the said extruder(s) make a toroidal extruded blank and in which the said picking up means is provided with a perforation pin (371) the end of which is flush with the die, moving with respect to the said die at a velocity such that the time necessary to pass through the inside diameter of the central hole of the toroidal blank is equal to the extrusion time necessary to obtain the required quantity of plastic material.

27. Workshop according to claim 23, in which a fifth transfer means fitted with receptacles is moved in a discontinuous movement such that the extruded blanks are deposited in the said receptacles when the said fifth transfer means is completely stopped, and such that the said extruded blanks are extracted from the said receptacles to be deposited in the air gap of the moulding device moved by the third transfer means, when the said fifth transfer means is moving.

28. Workshop according to claim 25, including an immobile extruder fitted with a die to obtain an extrudate (805) in the shape of a thick tube and in which the said fourth transfer means (810) is (are) provided with a blade (821) that shears the said extrudate when moving and that belongs to the receptacle (820) that collects the blank thus sheared.

29. Workshop according to claim 28, in which the blade (821) is in the shape of a V, the angle of the V preferably being between 80 and 120°.

30. Workshop according to either claim 28 or 29, in which the said substantially toroidal blank is put into place by gravity and / or using an air jet, in the air gap between the moulding tools.

31. Workshop according to claim 22, in which the cavities of the said punches and the said dies are defined such that the tube heads thus moulded have a neck (903) for which the top end is holding a stopper (904) that has at least one transverse wall (905) that includes a frangible area (906) for which the closed contour delimits the required shape of the orifice and that is surrounded by two areas capable of resisting the mechanical force necessary to break the said frangible area, one (907 and 909) of them being designed to transmit the said mechanical force and the other (908) to transmit the thrust, and in which a means is provided on the path of the said tube heads such that the said mechanical force can be applied on part of the stopper separated from the frangible area by area (907 and 909) capable of transmitting the said mechanical force, the consequence of application of the said mechanical force being to break the frangible area (906) and obtain the distribution orifice.

32. Workshop according to claim 31, in which the said frangible area (906) is cut with a V-shaped notch, the angle of the V being between 30° and 90° and preferably between 40° and 50°, the bisector (963) of the V making an angle between 0° and 45° with the axis (1000) of the said neck (903).

33. Workshop according to either claim 31 or 32, in which the said means for applying the mechanical force is provided on the trajectory of the tube heads at a distance from the unmoulding area such that the frangible area (906) is broken during cooling after moulding, as soon as the temperature of the plastic material at the frangible area drops slightly below the vitreous transition temperature.

34. Workshop according to any one of claims 31 to 33, in which the shape of the stopper (904) enables cooperation with an element that does not follow the overall continuous movement of the third transfer means (10), such that the break is triggered by the different movements between this element and the third transfer means.

35. Workshop according to any one of claims 31 to 34, in which the stopper (904) comprises a transverse wall (905) and a stick (909) and in which an immobile pin is placed such that its end (910) follows the path of the end of the stick (909) at a distance such that the frangible area (906) is cooled to a temperature close to the vitreous transition temperature when the head of the tube (901) reaches this position, the end of the stick thus being immobilised by the pin while the bottom of the stick continues along its continuous movement (D) of the movement of the third transfer means (10).

36. Workshop according to any one of claims 31 to 34, in which the stopper has an upside down T-shaped section and in which an immobile rail (940) not tangent to the trajectory of the tube heads (901) is placed such that the end of the T-shaped stopper is trapped in the said rail when the tube heads arrive adjacent to the said rail.

37. Workshop according to any one of claims 13 to 36, **characterised in that** the second area is occupied by a rotary press (10) comprising moulding devices (200), means (280) for loading the skirts (1) and means for unloading the tubes (5), each moulding device (200) comprising a die (240) and a punch (210), the said rotary press being moved in a continuous rotation movement such that the assembly consisting of the moulding devices (200), the skirt (1) loading means (280) and the tube (5) unloading means are moved in a global continuous circular movement, each punch (210) being moved in an axial translation movement acting at one of its ends (220), and each die (240) being placed on a die holder (250) moved by a radial displacement means on the said die holder (250) provided with a hole (260) to allow the skirt (1) to pass when it is fitted around the punch (210) while the die moves on a larger diameter to collect the blank.

38. Workshop according to claim 37, in which the said axial translation movement is a cam follower (220) attached to the end of the punch (210) held in place by an elastic means in constant contact with the running track of a fixed cam, and in which a cylindrical portion (215) of the punch (210) is inserted into a sleeve that follows the overall circular movement of the said device, such that the said sleeve holds the said punch in parallel with the rotation axis (11) of the said rotary press (10).

39. Workshop according to either claim 37 or 38, in which the loading means is a loading fork (280) associated with a cam follower held in place by an elastic means in constant contact with the running track of a fixed cam.

40. Workshop according to any one of claims 37 to 39, in which the unloading means includes a duct formed in the punch and connected to a compressed air source.

## Patentansprüche

1. Verfahren zur Herstellung von Verbindungen für Teile aus Kunststoffen, wobei das Verfahren folgende Schritte umfasst:
- einen ersten Schritt, bei dem mindestens eins (1) der Teile der Verbindung, welches bereits realisiert ist, mit Hilfe eines ersten Transfermittels (100) kontinuierlich bewegt wird,
- einen zweiten Schritt, bei dem das Teil, das sogenannte erste Teil, mit Hilfe von Lademitteln (280) auf eins der Formwerkzeuge geladen wird, wobei ein Stück des Teils aus dem Werkzeug herausragt, so dass bei aneinander liegenden Formwerkzeugen diese eine Formkavität definieren, in welcher das herausragende Stück eingezwängt ist, wobei das Formwerkzeug mit einem dritten Transfermittel (10) verbunden ist, welches synchron zum ersten Transfermittel (100) kontinuierlich bewegt wird,
- einen dritten Schritt, bei dem die Verbindungen durch Formen eines Zwischenstücks hergestellt werden, bei welchem das herausragende Stück des Teils verschweißt oder durch den Kunststoff des Zwischenstücks eingezwängt ist, wobei das Zwischenstück durch Pressformen eines Vorproduktes durch Gegeneinanderbewegen der Formwerkzeuge gewonnen wird, welche Formwerkzeuge eine kontinuierliche Gesamtbewegung ausführen, die der Bewegung des dritten Transfermittels (10) entspricht,
- einen vierten Schritt, bei dem die Verbindungen (5) mit Hilfe von Entlademitteln auf einem zweiten Transfermittel (300) abgeladen werden, welches synchron zum dritten Transfermittel (10) kontinuierlich bewegt wird,
**dadurch gekennzeichnet, dass** das Vorprodukt durch Extrusion hergestellt und anschließend typischerweise durch Schneiden entnommen und vor dem Pressen in dem Spalt zwischen den Formwerkzeugen abgelegt wird, so dass das herausragende Stück des Teils während des Pressens autogen geschweißt oder durch den Kunststoff des Zwischenstücks eingezwängt wird.

2. Herstellungsverfahren nach Anspruch 1, bei dem die Verbindung eine Tube (5) ist, die als erstes Teil eine Schürze (1) und als Zwischenstück einen Kopf mit einem Hals und einer den Hals mit der Schürze verbindenden Schulter aufweist, wobei das Verfahren folgende Schritte umfasst:
- einen ersten Schritt, bei dem Schürzen (1) mit Hilfe eines ersten Transfermittels (100) kontinuierlich bewegt werden,
- einen zweiten Schritt, bei dem die Schürzen mit Hilfe von Lademitteln (280) auf Stempel (210) geladen werden, welche mit einem dritten Transfermittel (10) verbunden sind, das synchron zum ersten Transfermittel (100) kontinuierlich bewegt wird, wobei eins der Enden (3) der Schürzen (1) geringfügig aus den Stempeln (210) herausragt,
- einen dritten Schritt, bei dem die Tuben durch Anformen des Kopfes mit Schweißnaht an ein Ende (3) der Schürze hergestellt werden,
wobei der Kopf durch Pressformen eines Vorproduktes durch Gegeneinanderbewegen des mit der Schürze versehenen Stempels (210) und einer Matrize (240) gewonnen wird, der Stempel und die Matrize, wenn sie aneinander liegen, eine Formkavität definieren, in der das Ende der Schürze eingezwängt ist, und der Stempel und die Matrize eine kontinuierliche Gesamtbewegung ausführen, die der Bewegung des dritten Transfermittels (10) entspricht,
- einen vierten Schritt, bei dem die Tuben (5) mit Hilfe von Entlademitteln auf einem zweiten Transfermittel (300) abgeladen werden, welches synchron zum dritten Transfermittel (10) kontinuierlich bewegt wird,
**dadurch gekennzeichnet, dass** das Vorprodukt durch Extrusion hergestellt und anschließend typischerweise durch Schneiden entnommen und vor dem Pressen mit Hilfe eines vierten Transfermittels (810), welches synchron zum dritten Transfermittel (10) kontinuierlich bewegt wird, im Spalt des Formwerkzeugs, typischerweise im Hohlraum der Matrize (240), oder auf dem Ende des Stempels (210) abgelegt wird, so dass der Kunststoff des Vorproduktes während des Pressens mit dem Ende der Schürze (1) in Kontakt kommt und die Kunststoffe des Vorproduktes und der Schürze sich ohne weitere Wärme- oder Materialzuführung eng miteinander verschweißen.

3. Verfahren zur Herstellung von Tuben nach Anspruch 2, bei dem die Extrusion mit Mitteln durchgeführt wird, die durch ein mit dem dritten Transfermittel synchron laufendes viertes Transfermittel bewegt werden, welches den Extrusionsmitteln örtlich eine Bahn aufzwingt, die zu der der Stempel oder zu der der Matrizen, die jeweils zur Aufnahme der Vorprodukte dienen, parallel verläuft, wobei die Extrusionsachse auf einer Länge, die ausreicht, um die gewünschte Menge Kunststoff extrudieren zu können, weitgehend mit der Achse des Aufnahmewerkzeugs zusammenfällt.

4. Verfahren zur Herstellung von Tuben nach Anspruch 2, bei dem die Extrusion mit einem feststehenden Extruder erfolgt und bei dem ein oder mehrere vierte Transfermittel in kontinuierlicher Bewegung Zwischenbehältnisse transferieren, welche die Vorprodukte im Vorbeilaufen aufnehmen.

5. Verfahren zur Herstellung von Tuben nach Anspruch 4, bei dem ein Extrudat in Form einer dickwandigen zylindrischen Tube extrudiert und anschließend so geschnitten wird, dass das Vorprodukt eine weitgehend torische Form aufweist.

6. Verfahren zur Herstellung von Tuben nach Anspruch 5, bei dem das Schneiden des Extrudates im Vorbeilaufen mit einer Schneide (821) erfolgt, die mit dem oder den vierten Transfermitteln (810) fest verbunden ist und als Behältnis (820) für das so geschnittene Vorprodukt dient.

7. Verfahren zur Herstellung von Tuben nach Anspruch 6, bei dem für das Schneiden des Extrudates eine V-förmige Schneide (821) verwendet wird, wobei der V-Winkel vorzugsweise 80° bis 120° beträgt.

8. Verfahren zur Herstellung von Tuben nach irgendeinem der Ansprüche 5 bis 7, bei dem das weitgehend torische Vorprodukt durch Schwerkraft und/oder mit Hilfe eines Luftstrahls entweder im Hohlraum der Matrize (240) oder auf dem Ende des Stempels (210) angeordnet wird.

9. Verfahren zur Herstellung von Tuben nach irgendeinem der Ansprüche 2 bis 4, bei dem ein Stempel und eine Matrize verwendet werden, deren Hohlräume derart ausgestaltet sind, dass die so geformten Tubenköpfe einen Hals (903) aufweisen, auf dessen oberen Ende ein Verschlusselement (904) liegt, welches mindestens eine Querwand (905) mit einem trennbaren Bereich (906) besitzt, dessen Kontur die gewünschte Form der Öffnung abgrenzt und der von zwei Bereichen umgeben ist, die die notwendige mechanische Kraft für den Bruch der trennbaren Bereiche auszuhalten vermögen, wobei einer (907 und 909) davon die mechanische Kraft übertragen und der andere (908) als Stütze dienen soll, und bei dem das Verschlusselement nach Öffnen des Formwerkzeugs durch Relativverschiebung von Stempel und Matrize durch Anwendung der mechanischen Kraft auf einen Teil des Verschlusselements, der vom trennbaren Bereich durch den Bereich (907 und 909) zur Übertragung der mechanischen Kraft getrennt ist, entfernt wird, wobei die Anwendung der mechanischen Kraft den Bruch des trennbaren Bereichs (906) und die Herstellung der Öffnung zur Folge hat.

10. Verfahren zur Herstellung von Tuben nach Anspruch 9, bei dem der Bruch des trennbaren Bereichs (906) während der sich an die Formung anschließenden Abkühlung erfolgt, sobald der Kunststoff in der Höhe des trennbaren Bereichs eine Temperatur erreicht, die geringfügig unter seiner Glasübergangstemperatur liegt.

11. Verfahren zur Herstellung von Tuben nach Anspruch 9 oder 10, bei dem ein Stempel und eine Matrize verwendet werden, deren Hohlräume so ausgestaltet sind, dass das erhaltene Verschlusselement (904) eine Form hat, die das Zusammenwirken mit einem Element ermöglicht, das der kontinuierlichen Gesamtbewegung des dritten Transfermittels (10) nicht folgt, so dass der Bruch durch die Bewegungsdifferenz zwischen diesem Element und dem dritten Transfermittel ausgelöst wird.

12. Verfahren zur Herstellung von Verbindungen für Teile aus Kunststoffen nach Anspruch 1, dadurch geändert, dass die Formwerkzeuge Formgebungswerkzeuge sind und dass die Formgebungswerkzeuge im dritten Schritt ein Zwischenstück aus adhäsivem Polymermaterial formen, das an den bereits hergestellten Teilen haftet.

13. Anlage zur Herstellung von Tuben (5) mit einer Schürze (1) und einem Kopf, welcher mit einem Hals und einer den Hals mit der Schürze verbindenden Schulter versehenen ist, welche Anlage drei verschiedene Arbeitszonen aufweist, wobei
- die erste Zone der Herstellung der Schürzen zugewiesen ist,
- die zweite Zone der Herstellung der Tuben zugewiesen ist und mindestens eine Vorrichtung (30) zur Herstellung von Vorprodukten (20) aus Kunststoff aufweist, welche mindestens einen Extruder und mehrere Formeinrichtungen (200) zum Formen der Köpfe durch Pressen der Vorprodukte umfasst, wobei jede Formeinrichtung (200) eine Matrize (240) und einen Stempel (210) aufweist,
- die dritte Zone der Fertigstellung der Tuben zugewiesen ist, welche Anlage weiterhin umfast:
- ein erstes Transfermittel (100) mit einzelnen Trägern, typischerweise Stangen, zum Aufschieben der Schürzen, welches so kontinuierlich bewegt wird, dass die Schürzen von der ersten Zone zur zweiten Zone befördert werden,
- und ein zweites Transfermittel (300) mit Behältnissen, typischerweise Bechern, zur Aufnahme der Tuben, welches synchron zum vorhergehenden so kontinuierlich bewegt wird, dass die Tuben von der zweiten Zone zur dritten Zone befördert werden,
wobei die zweite Zone ein drittes Transfermittel (10) mit den genannten Stempeln (210) aufweist, das synchron zur Bewegung des ersten Transfermittels (100) und des zweiten Transfermittels (300) kontinuierlich bewegt wird, und die zweite Zone zusätzlich Lademittel (280) verbunden mit der synchronisierten Bewegung des ersten und dritten Transfermittels aufweist, die den Schürzen eine Relativbewegung in Richtung Stempel aufzwingen, sowie Entlademittel verbunden mit der synchronisierten Bewegung des zweiten und dritten Transfermittels aufweist, die den Tuben eine Relativbewegung in Richtung Behältnisse aufzwingen,
**dadurch gekennzeichnet, dass** die der Tubenherstellung zugewiesene zweite Zone weiterhin ein Mittel zur Entnahme der Vorprodukte, typischerweise durch Schneiden des aus dem Extruder austretenden Extrudates, und ein Transfermittel aufweist, mit welchem das Vorprodukt im Spalt des Formwerkzeugs, typischerweise im Hohlraum der Matrize (240), oder auf dem Ende des Stempels (210) abgelegt werden kann, so dass der Kunststoff des Vorproduktes während des Pressens mit dem Ende der Schürze (1) in Kontakt kommt und die Kunststoffe des Vorproduktes und der Schürze sich ohne weitere Wärme- oder Materialzuführung eng miteinander verschweißen.

14. Anlage nach Anspruch 13, bei der das erste Transfermittel (100) eine Dornenkette ist, wobei die Dorne zur Aufnahme der Schürzen beim Austritt aus der ersten Zone bestimmt und so angeordnet sind, dass sie jeder Schürze eine solche Bewegung aufzwingen, dass die Achse der Schürze stets weitgehend senkrecht zu ihrer Bahn bleibt.

15. Anlage nach Anspruch 13 oder 14, bei der die zweite Zone eine Fläche (1) zum Laden der Schürzen (1) auf die Stempel (210) aufweist, in welcher Lademittel (280) zwischen dem ersten Transfermittel und dem dritten Transfermittel agieren, sowie eine Herstellungsfläche (30) für Vorprodukte aus Kunststoff, eine Herstellungsfläche (II) für die Tuben (5) durch Pressformung der Köpfe auf den Enden der um die Stempel gelegten Schürzen und eine Entladefläche (III) für die so hergestellten Tuben aufweist, in welcher Entlademittel zwischen dem dritten Transfermittel und dem zweiten Transfermittel agieren und in welcher das dritte Transfermittel die Stempel in die Ladefläche (I) für die Schürzen, die Herstellungsfläche (II) für die Tuben und die Entladefläche (III) für die Tuben transferiert.

16. Anlage nach irgendeinem der Ansprüche 13 bis 15, bei der das zweite Transfermittel eine sich kontinuierlich bewegende Becherkette ist, derart, dass die Tuben von der ersten Zone zur dritten Zone befördert und dabei so bewegt werden, dass ihre Achse stets weitgehend senkrecht zu ihrer Bahn bleibt.

17. Anlage nach irgendeinem der Ansprüche 13 bis 16, bei der das erste und das zweite Transfermittel (100, 300) außerdem mit Akkumulationsmitteln versehen sind, die es ermöglichen, einen vorlaufenden Arbeitsgang vorübergehend fortzusetzen, obwohl ein nachlaufender Arbeitsgang nicht durchgeführt werden kann.

18. Anlage nach irgendeinem der Ansprüche 15 bis 17, bei der die Stempel (210) und die Schürzen (1) in der Ladefläche parallelen Bahnen folgen, während ihre Achsen weitgehend zusammenfallen, und bei der die Lademittel (280) an dem dritten Transfermittel (10) befestigt sind und den Schürzen eine relative Axialverschiebung in Richtung Stempel aufzwingen, derart, dass die Schürzen mit ihrem ersten offenen Ende mit geringem Spiel in die Stempel eingeführt werden, bis sie fast vollständig um die Stempel gelegt sind, wobei ihr mit dem Kopf zu verschweißendes zweites Ende aus dem Stempelkopf herausragt.

19. Anlage nach irgendeinem der Ansprüche 15 bis 18, bei der die zweite Zone mehrere dritte Transfermittel aufweist, die durch die Ladefläche (I) geführt sind, wo die Lademittel (280) in gruppierter Weise agieren, um den durch das jeweilige dritte Transfermittel (10) bewegten Stempel gleichzeitig mit einer Schürze (1) des ersten Transfermittels (100) zu versorgen.

20. Anlage nach Anspruch 19, bei der die mehreren dritten Transfermittel (10) durch die Entladefläche (III) geführt sind, wo die Entlademittel in gruppierter Weise agieren, um jeden Stempel (210) eines jeden dritten Transfermittels (10) zu entladen und das zweite Transfermittel (300) mit Tuben (5) zu versorgen.

21. Anlage nach irgendeinem der Ansprüche 13 bis 20, bei der das Lademittel (280) so axial verschoben wird, dass es die Schürze mit einem ihrer Enden zum Stempel (210) schiebt, und das Entlademittel einen im Stempel (210) ausgebildeten Kanal aufweist, der in eine oder mehrere Stellen des Stempelkopfes (230) mündet und an eine Druckluftquelle angeschlossen ist.

22. Anlage nach irgendeinem der Ansprüche 13 bis 21, umfassend einen feststehenden Extruder, ein Mittel zur Entnahme der Vorprodukte durch Schneiden des aus dem Extruder austretenden Extrudates und ein Transfermittel, das die Vorprodukte auf einem Stempel oder einer Matrize im Vorbeilaufen daran ablegt.

23. Anlage nach irgendeinem der Ansprüche 13 bis 22, bei der das Transfermittel für die extrudierten Vorprodukte synchron zur Bewegung des dritten Transfermittels kontinuierlich bewegt wird, wenn die extrudierten Vorprodukte im Spalt der Formwerkzeuge abgelegt sind.

24. Anlage nach Anspruch 23, umfassend mehrere Extrusionsmittel, die von einem mit dem dritten Transfermittel synchron laufenden vierten Transfermittel bewegt werden, welches so angeordnet ist, dass es den Extrusionsmitteln örtlich eine Bahn aufzwingt, die zu der der Stempel oder zu der der Matrizen, die jeweils zur Aufnahme der Vorprodukte bestimmt sind, parallel verläuft, wobei die Extrusionsachse auf einer Länge, die ausreicht, um die gewünschte Menge Kunststoff extrudieren zu können, weitgehend mit der Achse des Aufnahmewerkzeugs zusammenfällt.

25. Anlage nach Anspruch 23, umfassend einen feststehenden Extruder und bei der ein oder mehrere sich kontinuierlich bewegende vierte Transfermittel mit Zwischenbehältnissen versehen sind, welche die Vorprodukte im Vorbeilaufen aufnehmen.

26. Anlage nach irgendeinem der Ansprüche 22 bis 25, bei welcher der oder die Extruder die Herstellung eines extrudierten Vorproduktes torischer Form gestatten und bei der das Entnahmemittel mit einem Perforationsstift (371) versehen ist, dessen Ende mit der Extruderdüse flüchtig in Kontakt kommt und der sich in Bezug auf die Extruderdüse mit einer solchen Geschwindigkeit bewegt, dass die Zeit, die notwendig ist, um den Innendurchmesser des zentrales Lochs des torischen Vorproduktes zu durchlaufen, der Extrusionszeit zur Gewinnung der notwendigen Menge Kunststoff entspricht.

27. Anlage nach Anspruch 23, bei der ein mit Behältnissen versehenes fünftes Transfermittel so diskontinuierlich bewegt wird, dass die extrudierten Vorprodukte in den Behältnissen abgelegt werden, wenn das fünfte Transfermittel vollständig abgeschaltet ist.

28. Anlage nach Anspruch 25, umfassend einen feststehenden Extruder mit einer Extruderdüse zur Gewinnung eines Extrudates (805) in Form einer dickwandigen Tube und bei der das oder die vierten Transfermittel (810) mit einer Schneide (821) versehen sind, die das Extrudat im Vorbeilaufen abschneidet und die zum Behältnis (820) gehört, welches das so abgeschnittene Extrudat aufnimmt.

29. Anlage nach Anspruch 28, bei der die Schneide (821) eine V-Form hat, wobei der V-Winkel vorzugsweise 80° bis 120° beträgt.

30. Anlage nach Anspruch 28 oder 29, bei der das weitgehend torische Vorprodukt durch Schwerkraft und/oder mit Hilfe eines Luftstrahls in den Spalt zwischen den Formwerkzeugen eingebracht wird.

31. Anlage nach Anspruch 22, bei der die Hohlräume der Stempel und der Matrizen derart ausgestaltet sind, dass die so geformten Tubenköpfe einen Hals (903) aufwesen, auf dessen oberen Ende ein Verschlusselement (904) liegt, welches mindestens eine Querwand (905) mit einem trennbaren Bereich (906) besitzt, dessen Kontur die gewünschte Form der Öffnung abgrenzt und der von zwei Bereichen umgeben ist, welche die notwendige mechanische Kraft für den Bruch der trennbaren Bereiche auszuhalten vermögen, wobei einer (907 und 909) davon die mechanische Kraft übertragen und der andere (908) als Stütze dienen soll, und bei der ein Mittel vorgesehen ist, das so auf der Bahn der Tubenköpfe angeordnet ist, dass es die mechanische Kraft auf einen Teil des Verschlusselements, welcher vom trennbaren Bereich durch den Bereich (907 und 909) zur Übertragung der mechanischen Kraft getrennt ist, anzuwenden vermag, wobei die Anwendung der mechanischen Kraft den Bruch des trennbaren Bereichs (906) und die Herstellung der Öffnung zur Folge hat.

32. Anlage nach Anspruch 31, bei welcher der trennbare Bereich (906) mit einer Kerbe in V-Form versehen ist, wobei der V-Winkel 30 bis 90°, vorzugsweise 40 bis 50° beträgt und die Winkelhalbierende des V einen Winkel von 0 bis 45° mit der Achse (1000) des Halses (903) bildet.

33. Anlage nach Anspruch 31 oder 32, bei der das Mittel zur Anwendung der mechanischen Kraft auf der Bahn der Tubenköpfe in einem solchen Abstand vom Entformungsbereich angeordnet ist, dass der Bruch des trennbaren Bereichs (906) während der sich an die Formung anschließenden Abkühlung erfolgt, sobald der Kunststoff in der Höhe des trennbaren Bereichs eine Temperatur erreicht, die geringfügig unter seiner Glasübergangstemperatur liegt.

34. Anlage nach irgendeinem der Ansprüche 31 bis 33, bei der das Verschlusselement (904) eine Form hat, die das Zusammenwirken mit einem Element ermöglicht, das der kontinuierlichen Gesamtbewegung des dritten Transfermittels (10) nicht folgt, so dass der Bruch durch die Bewegungsdifferenz zwischen diesem Element und dem dritten Transfermittel ausgelöst wird.

35. Anlage nach irgendeinem der Ansprüche 31 bis 34, bei der das Verschlusselement (904) eine Querwand (905) und ein Stäbchen (909) aufweist und bei der ein feststehender Finger so angeordnet ist, dass sein Ende (910) auf der Bahn des Endes des Stäbchens (909) in einem solchen Abstand liegt, dass der trennbare Bereich (906) bis auf eine Temperatur nahe der Glasübergangstemperatur abgekühlt wird, wenn der Tubenkopf (901) in diese Stellung gelangt, wobei das Ende des Stäbchens somit durch den Finger festgelegt ist, während die Basis des Stäbchens ihre kontinuierliche Bewegung (D) in Verbindung mit der Bewegung des dritten Transfermittels (10) fortsetzt.

36. Anlage nach irgendeinem der Ansprüche 31 bis 34, bei der das Verschlusselement einen Querschnitt in umgekehrter T-Form aufweist und bei der eine feststehende, die Bahn der Tubenköpfe nicht berührende Schiene (940) so angeordnet ist, dass das Ende des Verschlusselements in T-Form in der Schiene eingefangen ist, wenn die Tubenköpfe vor die Schiene gelangen.

37. Anlage nach irgendeinem der Ansprüche 13 bis 36, **dadurch gekennzeichnet, dass** die zweite Zone von einer Rotationsmaschine (10) besetzt ist, welche Formeinrichtungen (200), Lademittel (280) für die Schürzen (1) und Entlademittel für die Tuben (5) aufweist, wobei jede Formeinrichtung (200) aus einer Matrize (240) und einem Stempel (210) besteht, die Rotationsmaschine so kontinuierlich rotiert, dass sämtliche Formeinrichtungen (200), Lademittel (280) für die Schürzen (1) und Entlademittel für die Tuben (5) mit einer kontinuierlichen, kreisförmigen Gesamtbewegung bewegt werden, jeder Stempel (210) durch ein Mittel zur Axialverschiebung bewegt wird, das an einem seiner Enden (220) agiert, und jede Matrize (240) auf einem Matrizenhalter (250) angeordnet ist, der durch ein Mittel zur Radialverschiebung bewegt wird, welcher Matrizenhalter (250) mit einem Loch (260) zur Durchführung der Schürze (1) bei ihrem Aufbringen um den Stempel (210) herum versehen ist, während die Matrize sich zur Aufnahme des Vorproduktes auf einem größeren Durchmesser bewegt.

38. Anlage nach Anspruch 37, bei der das Mittel zur Axialverschiebung ein am Ende des Stempels (210) befestigter Kurvenfolger (220) ist, welcher durch ein elastisches Mittel in konstantem Kontakt mit der Laufbahn einer festen Kurve gehalten wird, und bei der ein zylindrischer Abschnitt (215) des Stempels (210) in einer Muffe steckt, die der kreisförmigen Gesamtbewegung der Anordnung folgt, so dass die Muffe den Stempel parallel zur Rotationsachse (11) der Rotationsmaschine (10) hält.

39. Anlage nach Anspruch 37 oder 38, bei der das Lademittel eine Ladegabel (280) verbunden mit einem Kurvenfolger ist, welcher durch ein elastisches Mittel in konstantem Kontakt mit der Laufbahn einer festen Kurve gehalten wird.

40. Anlage nach irgendeinem der Ansprüche 37 bis 39, bei der das Entlademittel einen im Stempel ausgebildeten Kanal aufweist, der an eine Druckluftquelle angeschlossen ist.
